(19) Europäisches Patentamt / European Patent Office / Office européen des brevets

(11) **EP 3 211 811 A1**

(12) **EUROPEAN PATENT APPLICATION**
published in accordance with Art. 153(4) EPC

(43) Date of publication:
**30.08.2017 Bulletin 2017/35**

(51) Int Cl.:
*H04J 11/00* (2006.01)

(21) Application number: **15853482.6**

(86) International application number:
**PCT/KR2015/011196**

(22) Date of filing: **22.10.2015**

(87) International publication number:
**WO 2016/064217 (28.04.2016 Gazette 2016/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **24.10.2014 KR 20140144725**

(71) Applicant: Samsung Electronics Co., Ltd.
**Gyeonggi-do 16677 (KR)**

(72) Inventors:
• **HONG, Sungnam**
  **Suwon-si**
  **Gyeonggi-do 16677 (KR)**

• **SAGONG, Min**
  **Suwon-si**
  **Gyeonggi-do 16677 (KR)**
• **KIM, Taeyoung**
  **Suwon-Si**
  **Gyeonggi-do 16677 (KR)**
• **SEOL, Jiyun**
  **Suwon-si**
  **Gyeonggi-do 16677 (KR)**

(74) Representative: **Nederlandsch Octrooibureau**
**P.O. Box 29720**
**2502 LS The Hague (NL)**

(54) **METHOD AND APPARATUS FOR RECEIVING SIGNALS BASED ON INTERFERENCE MEASUREMENT IN MOBILE COMMUNICATION SYSTEM**

(57) The present disclosure relates to a 5G or a pre5G communication system to be provided for supporting a higher data transmission rate after 4G communication systems, such as LTE. According to embodiments of the present invention, a method and an apparatus for receiving signals in a mobile communication system may be provided, the method comprising the steps of: receiving a second signal including an interference signal of a first signal transmitted by a first terminal and a first signal transmitted by a second terminal; obtaining information related to the interference signal; removing the interference signal on the basis of the obtained information; and decoding the first signal after removing the interference signal from the second signal, wherein the information related to the interference signal includes resource block allocation information with respect to the interference signal and/or a reference signal for demodulating the interference signal.

FIG. 18

```
              start
                │
        receive uplink signal          ─ 1810
                │
   acquire interference signal information   ─ 1820
                │
   perform channel compensation and
     receive antenna combination       ─ 1830
                │
       decode received signal          ─ 1840
                │
               end
```

**Description**

**[Technical Field]**

The present invention relates to a method and apparatus for receiving signals based on interference measurement in a mobile communication system.

**[Background Art]**

In order to meet the increasing demand for wireless data traffic since the commercialization of 4G communication systems, the development focus is on the $5^{th}$ Generation (5G) or pre-5G communication system. For this reason, the 5G or pre-5G communication system is called a beyond 4G network communication system or post Long Term Evolution (LTE) system.

Consideration is being given to implementing the 5G communication system in millimeter wave (mmWave) frequency bands (e.g., 60 GHz bands) to accomplish higher data rates. In order to increase the propagation distance by mitigating propagation loss in the 5G communication system, discussions are underway about various techniques such as beamforming, massive MIMO, Full Dimensional MIMO (FD-MIMO), array antenna, analog beamforming, and large scale antenna.

Also, in order to enhance network performance of the 5G communication system, developments are underway of various techniques such as evolved small cell, advanced small cell, cloud Radio Access Network (cloud RAN), ultra-dense network, Device to Device (D2D) communication, wireless backhaul, moving network, cooperative communication, Coordinated Multi-Points (CoMP), and interference cancellation.

Furthermore, the ongoing research for the 5G communication system includes the use of Hybrid FSK and QAM Modulation(FQAM) and Sliding Window Superposition Coding (SWSC) as Advanced Coding Modulation (ACM), Filter Bank Multi Carrier (FBMC), Non-Orthogonal Multiple Access (NOMA), and Sparse Code Multiple Access (SCMA).

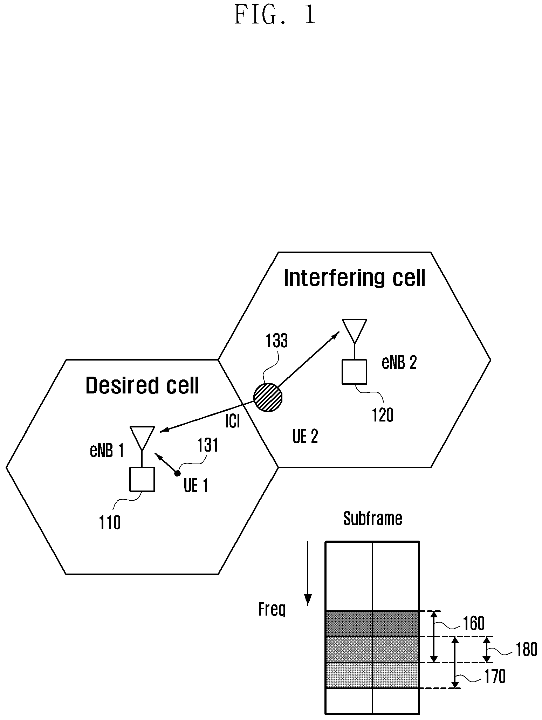

In a Single Carrier-Frequency Division Multiple Access (SC-FDMA) uplink network, Inter-Cell Interference (ICI) may cause significant performance degradation of a serving evolved Node B (eNB). In the example of FIG. 1, a User Equipment (UE) 1 131 performs uplink transmission to the eNB 1 110 as the serving eNB of the UE 1 131 using the first frequency region 160. In the case that the UE 2 133 located in a neighboring cell of the eNB 1 110 performs uplink transmission to a neighboring eNB, i.e., eNB 2 120, using the second frequency region 170, the signal of the UE 2 133 located close to the eNB 1 110 may act as ICI to the eNB 1 110. The third frequency region 180 as the overlap of the first and second frequency regions 160 and 170 may be an interference frequency region. At this time, if the received signal strength from the UE 131 is equal to or greater than that from the UE 2 133 at the eNB 1 110, the eNB 1 110 cannot correctly decode or demodulate the signal received from the UE 1 131, resulting in significant degradation of the eNB 1 110.

In such a situation, the following methods can be applied for the eNB 1 110 to reduce the influence of ICI.

- Conventional technology 1: Interference rejection and combining (IRC) (e.g., Indirect Minimum Mean Square Error (MMSE)-Interference Rejection Combiner (IRC))
- Conventional technology 2: Interference Cancellation (IC) in Centralized Radio Access Network (C-RAN)

The conventional technology 1 is characterized in that the serving eNB does not use any ICI information and only uses the information on a target UE. For example, the eNB 1 110 uses only the information on the UE 1 131 in the exemplary case of FIG. 1. This means that the conventional technology 1 cannot effectively cancel the influence of ICI; thus, it is difficult to expect significant performance improvement.

Meanwhile, the conventional technology 2 is capable of reducing the influence of ICI by removing interferer signals from the desired signal transmitted by the serving eNB based on the ICI information received from other eNBs through inter-eNB communication. For example, the eNB 1 110 receives the information on the signal transmitted by the UE 2 133 that causes ICI for use in ICI cancellation in the exemplary case of FIG. 1. The conventional technology 2 is capable of effectively removing the influence of the interferer signals using the information on the signals causing the ICI. However, the use of this method is limited to very special network environments such as C-RAN environment because of the large amount of information exchange among the eNBs.

The interference cancellation (IC) technology that is typically used by a base station(eNB) cancels the interference after a decoding or demodulation process, and this technology is outstandingly superior in performance to the IRC technology for attenuating influence of interference before demodulation or decoding. However, the IC technology requires more information than the IRC technology. For example, in order to use a demodulation-based IC technology in an Orthogonal Frequency Division Multiple Access-based (OFDMA-based) LTE downlink network, the receiver needs to know the information on presence/absence of interference per Resource Block (RB), interference modulation information, and interference fading channel information. Accordingly, the receiver has to receive the above information from neighboring cells or perform blind sensing to acquire the corresponding information to use the IC technology. Since it may cause significant overhead to receive all the above information from the neighboring cells, much research is being conducted on an IC method in which part of the above information is received from neighboring cells in LTE downlink and the remaining information is obtained through blind sensing (mostly based on brute-force search).

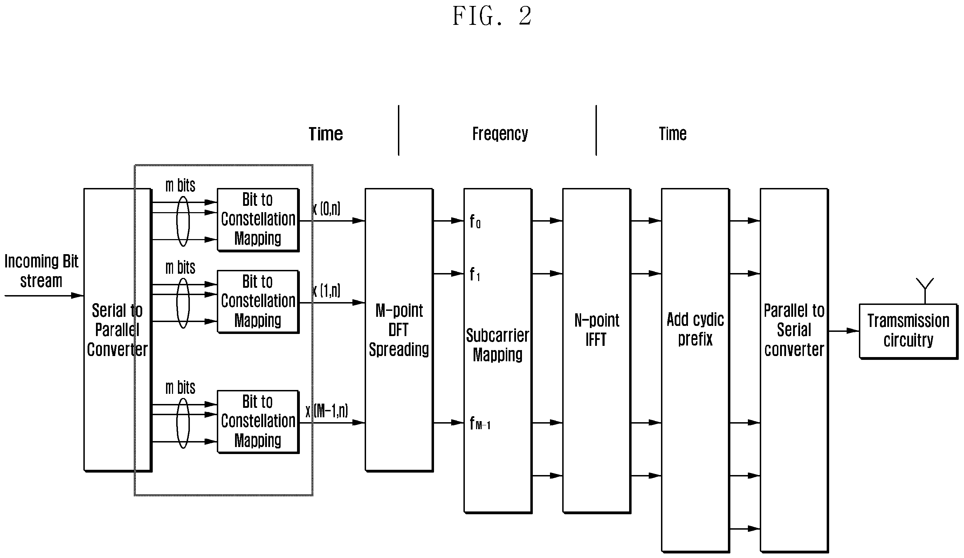

In an LTE uplink network operating with SC-FDMA as shown in FIG. 2, it is impossible to apply the modulation-based IC technology designed for an OFDMA-based LTE downlink network because of the characteristics of the SC-FDMA. For example, since a Discrete Fourier Transform (DFT) must be performed in consideration of the size of subcarriers allocated to the UE (terminal) in the SC-FDMA uplink network, it is impossible to decode ICI with the information on the presence/absence of interference of ICI per RB as in the OFDMA-based LTE downlink network. There is therefore a need of an IC technology for cancelling interference in the SC-FDMA based uplink network based on the ICI information in consideration of real network environments.

**[Disclosure of Invention]**

**[Technical Problem]**

The present invention aims to provide a method and apparatus for receiving signals based on interference measurement in a mobile communication system. Also, the present invention aims to provide a signal reception method and apparatus that is capable of improving throughput of an SC-FDMA based uplink network.

**[Solution to Problem]**

In accordance with an aspect of the present invention, a method for receiving a signal in a mobile communication system includes receiving a second signal including a first signal transmitted by a first terminal and an interference signal to the first signal, the interference signal being transmitted by a second terminal, acquiring information on the interference signal, cancelling the interference signal based on the acquired information, and decoding the first signal by cancelling the interference signal from the second signal, wherein the interference signal information comprises at least one of resource block (RB) allocation information of the interference signal and a reference signal (or pilot signal) for modulating the interference signal.

In accordance with another aspect of the present invention, a receiver for receiving uplink signals in a mobile communication system includes a communication unit which receives signals transmitted by at least one terminal and a control unit which controls receiving a second signal including a first signal transmitted by a first terminal and an interference signal to the first signal, the interference signal being transmitted by a second terminal, acquiring information on the interference signal, cancelling the interference signal based on the acquired information, and decoding the first signal by cancelling the interference signal from the second signal, wherein the interference signal information comprises at least one of resource block (RB) allocation information of the interference signal and a reference signal for modulating the interference signal.

**[Advantageous Effects of Invention]**

The signal reception method and apparatus of the present invention is advantageous in terms of receiving signals based on interference measurement in a mobile communication system.

Also, the signal reception method and apparatus of the present invention is advantageous in terms of improving throughput in an SC-FDMA based uplink network. Also, the signal reception method and apparatus of the present invention is advantageous in terms of performing IC based on part of ICI information in an SC-FDMA based uplink network.

Also, the signal reception method and apparatus of the present invention is advantageous in terms of improving Signal-to-Noise Ratio (SNR) gain compared with conventional IC technologies.

**[Brief Description of Drawings]**

FIG. 1 is a diagram for explaining interference to an uplink transmission of a terminal in a mobile communication system;
FIG. 2 is a diagram illustrating an SC-FDMA-based uplink transmission procedure;
FIG. 3 is a diagram illustrating a signal processing procedure of an eNB according to an embodiment of the present invention;

FIG. 4 is a graph for explaining the effects of using the method according to the embodiment of FIG. 3;

FIG. 5 is a diagram illustrating symbol level signal detection according to an embodiment of the present invention;

FIGs. 6A to 6C are a diagram illustrating a signal processing procedure for cancelling multiple interferences by expanding the procedure of FIG. 3

FIG. 7 is a diagram illustrating a signal processing procedure being performed without the direct MMSE-IRC operation in the embodiment of FIG. 3;

FIGs. 8A to 8C and 9A to 9C are diagrams illustrating signal processing procedures being performed without the direct MMSE-IRC operation in the procedure of FIG. 6;

FIG. 10 is a diagram illustrating a signal processing procedure being performed without the indirect MMSE-IRC operation in the embodiment of FIG. 3;

FIGs. 11A to 11C are a diagram illustrating a signal processing procedure being performed without the indirect MMSE-IRC operation in the embodiment of FIG. 6;

FIG. 12 is a diagram illustrating a signal processing procedure being performed without the indirect MMSE-IRC and direct MMSE-IRC operations in the embodiment of FIG. 3;

FIGs. 13A and 13B are a diagram illustrating a signal processing procedure being performed without the indirect MMSE-IRC and direct MMSE-IRC operations in the embodiment of FIG. 6

FIG. 14 is a diagram illustrating a modified embodiment of the embodiment of FIG. 13;

FIG. 15 is a diagram illustrating a signal processing procedure for improving the channel decoding performance by predicting reliability of an estimation value according to an embodiment of the present invention;

FIG. 16 is a diagram illustrating a signal processing procedure including an interference suppression technique according to an embodiment of the present invention;

FIG. 17 is a diagram for explaining a blanking technique;

FIGs. 18 and 19 are flowcharts illustrating signal processing methods according to an embodiment of the present invention;

FIG. 20 is a block diagram illustrating a receiver according to an embodiment of the present invention; and

FIG. 21 is a block diagram illustrating a UE according to an embodiment of the present invention.

**[Mode for the Invention]**

Exemplary embodiments of the present invention are described in detail with reference to the accompanying drawings. The same reference numbers are used throughout the drawings to refer to the same or like parts. Detailed descriptions of well-known functions and structures incorporated herein may be omitted to avoid obscuring the subject matter of the present invention. This aims to omit unnecessary description so as to make the subject matter of the present invention clear.

Embodiments of the present invention relate to interference measurement-based signal reception methods and apparatuses in a mobile communication system. Some embodiments of the present invention are directed to signal reception methods and apparatuses capable of improving throughput of an SC-FDMA based uplink network. Descriptions are made of the signal reception methods and apparatuses capable of Interference Cancellation (IC) based on specific information as part of the information on Inter-Cell Interference (ICI) in an SC-FDMA-based uplink network. The specific information may include Resource Block (RB) allocation information and Demodulation Reference Signal (DMRS) information for use in an SC-FDMA-based uplink network. The specific information may include part of multiple ICI information. Although the embodiments of the present invention are directed to SC-FDMA-based downlink transmission, the present invention is not limited thereto.

The embodiments of the present invention are applicable to a situation where no inter-eNB cooperation is performed (distributed RAN) and a situation where inter-eNB cooperation is performed restrictively. In an embodiment of the present invention, the term "uplink" denotes the direction from a UE to an eNB. Unless otherwise stated, the term eNB (base station) refers to a receiver

It should be noted that the OFDMA-based LTE downlink interference cancellation (IC) and the SC-FDMA-based LTE uplink interference cancellation are categorized into different technologies.

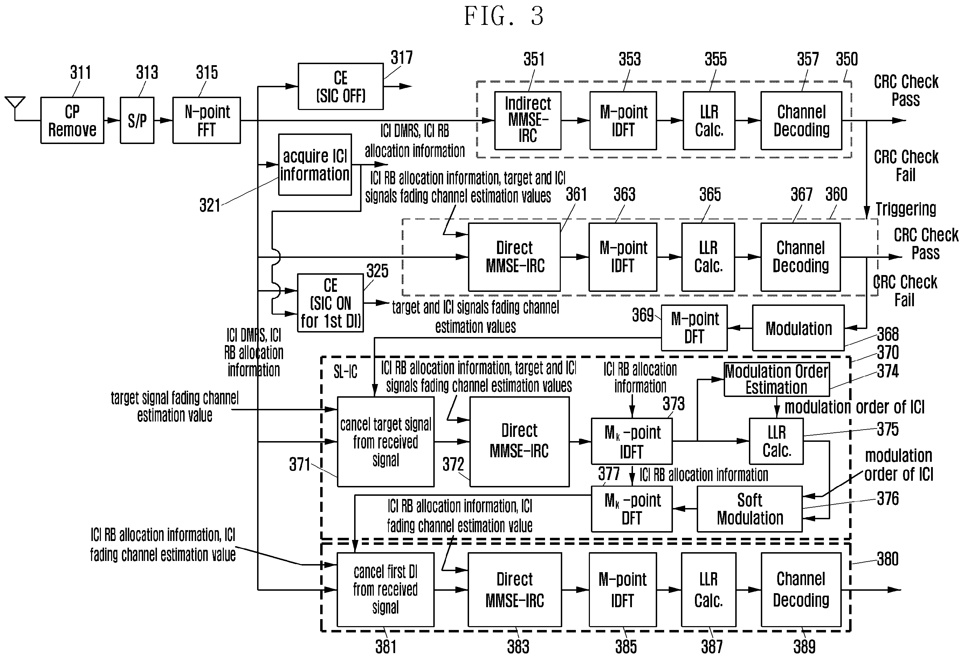

FIG. 3 is a diagram illustrating a signal processing procedure of an eNB according to an embodiment of the present invention. Although FIG. 3 illustrates the receiver (e.g., eNB) with one receive antenna for reducing drawing complexity, the receiver may include multiple receive antennas. The receiver may receive uplink signals (uplink channel, uplink data, and uplink traffic) using the receive antenna.

The receiver may perform Cyclic Prefix removal at operation 311, serial/parallel (S/P) conversion at operation 313, and N-point Fast Fourier Transform (FFT) at operation 315. In LTE uplink 10 MHz mode, N is 1024.

The output of the FFT may be processed as follows.

Operation 350: Apply indirect Minimum Mean Square Error-Interference Rejection Combiner (MMSE-IRC) and perform Cyclic Redundancy Check (CRC)

Operation 360: Apply direct MMSE-IRC and perform CRC using ICI RB allocation information and DMRS information

Operation 370: Perform Symbol Level Interference Cancellation (SLIC). Remove target signal estimation value from the received signal and perform modulation symbol level estimation on Dominant Interference (DI) received at the greatest power level.

Operation 380: Remove specific DI (e.g., strongest interference) estimation value and perform direct MMSE-IRC on the target signal.

In FIG. 3, if the CRC test fails in the operation 350, the receiver performs operation 360 and, if the CRC test fails in the operation 360, the receiver performs operation 370. However, the present invention is not limited thereto, and at least one of operations 350, 360, 370, and 380 may be omitted or performed. Among the function blocks of FIG. 3, the MMSE-IRC function blocks 351, 361, 372, and 383 take charge of channel compensation and combining receive antennas. Factors being considered in channel compensation may be changed per function block and, in particular, the [R] value may change in an equation.

Hereinafter, the respective operations are described in more detail.

The receiver performs Channel Estimation (CE) on the uplink signal from the UE at operation 317. The receiver may estimate a fading channel of the desired signal using the reference signal destined for the target UE (e.g., DMRS). The fading channel estimation includes fading channel coefficient estimation. The channel estimation may be accomplished using various conventional methods (e.g., Least Square Estimation, 1D or 2D MMSE estimation, and Wiener filtering). The receiver may perform the operation 350 using a fading channel estimation value of the desired signal.

An indirect MMSE-IRC is applied to the operation 350. The receiver may acquire a channel-compensated signal through interference cancellation with the following method at operation 351.

[Equation 1]

$$\hat{x}_k = \mathbf{W}_k \mathbf{y}_k \quad \text{where} \quad \mathbf{W}_k = \mathbf{H}_{1,k}^H \mathbf{R}^{-1} \quad \text{and} \quad \mathbf{R} = \mathbf{H}_{1,k} \mathbf{H}_{1,k}^H + E\left[\left(\mathbf{y}_k - \mathbf{H}_{1,k} p_1\right)\left(\mathbf{y}_k - \mathbf{H}_{1,k} p_1\right)^H\right]$$

$y_k$: N-point FFT output of received signal

$H_{1,k}^H$: channel matrix for desired signal

$P_k$: DMRS for $k^{th}$ UE (index of target UE is set to 1 for convenience of expression with equation)

The receiver performs M-point Inverse Discrete Fourier Transform (IDFT) at operation 353 using the information on the resources allocated to the target UE, calculates a log-likelihood ratio at operation 355, and performs channel decoding at operation 357. The receiver performs a Cyclic Redundancy Check (CRC) test on the channel decoding output and determines whether the desired signal is decoded successfully. If the CRC test fails, this means that the receiver fails in decoding or demodulating the desired signal because of an interference signal.

If the CRC test fails, this may trigger the operation 360 of the receiver. In the operation 360, the receiver may apply a direct MMSE-IRC using ICI RB allocation information and DMRS information.

The receiver may acquire ICI information at operation 321. The ICI information acquisition may be accomplished with a blind ICI sensing technology. The receiver may use specific information as part of the ICI information for interference signal channel estimation. The specific information may include at least one of ICI RB allocation information and DMRS information. The receiver may acquire the ICI information from a signal transmitted by the UE. It may also be possible to receive the ICI information from an eNB serving a UE transmitting the interference signal. In more detail, in a network environment where ICI information is not shared among the eNBs, the receiver performs blind estimation to acquire all the information. If the eNBs share part of the ICI information (e.g., network environment in which part of ICI RB allocation information is fixed), the receiver performs the blind estimation operation for the remaining information with the exception of the shared part of the ICI information. If the eNBs share both the ICI RB allocation information and DMRS information, the receiver may not perform the blind estimation operation.

After acquiring the ICI information, the receiver performs at operation 325 a fading channel estimation operation on the target signal and ICI signal using the ICI information. In the embodiment of FIG. 3, the receiver may perform the fading channel estimation operation on the first dominant interference (first DI). It may also be possible to perform the fading channel estimation on multiple interference signals. Detailed descriptions on the legacy fading channel estimation methods (Least Square Estimation + IC on DMRS, 1D or 2D MMSE estimation + IC on DMRS, and Wiener filtering + IC on DMRS) are omitted herein. After completing the channel estimation operation, the receiver performs a direct MMSE-IRC operation using the channel estimation information and ICI RB allocation information at operation 361. During the channel estimation, a successive interference cancellation operation may be performed.

The operation 360 is performed with a direct MMSE-IRC. The receiver may acquire a channel-compensated signal using the following method at operation 361.

[Equation 2]

$$\hat{x}_k = \mathbf{W}_k \mathbf{y}_k \quad \text{where} \quad \mathbf{W}_k = \mathbf{H}_{1,k}^H \mathbf{R}^{-1}$$

In equation 2, R may be calculated with equation 3.

[Equation 3]

$$\mathbf{R} = \mathbf{H}_{1,k}\mathbf{H}_{1,k}^H + \mathbf{H}_{2,k}\mathbf{H}_{2,k}^H \kappa_{2,k} + E\left[\left(\mathbf{y}_k - \mathbf{H}_{1,k}p_1 - \mathbf{H}_{2,k}p_2\kappa_{2,k}\right)\left(\mathbf{y}_k - \mathbf{H}_{1,k}p_1 - \mathbf{H}_{2,k}p_2\kappa_{2,k}\right)^H\right]$$

$y_k$: N-point FFT output of received signal

$H_{1,k}^H$: channel matrix for desired signal

$P_k$: DMRS for kth UE

$H_{2,k}^H$: channel matrix for first dominant interference

$\kappa_{2,k}$: If ICI is overlapped, this value is 1, otherwise this value is 0

The MMSE-IRC is different from the IRC of equation 1 in that the influence of ICI is reflected in calculating the [R] value (e.g., using the fading channel estimation value ($H_{2,k}$) of the interference signal).

Next, the receiver performs M-point IDFT at operation 363 using the information on the resources allocated to the target UE, calculates a log-likelihood ratio at operation 363, and performs channel decoding at operation 367. The receiver performs a CRC test on the channel decoding output to determine whether the desired signal is decoded successfully. If the CRC test fails, this means that the receiver fails in decoding or demodulating the desired signal because of an interference signal.

If the CRC test fails, this may trigger the operation 370 of the receiver. The receiver may perform symbol-level interference cancellation (SL-IC) using the result of the operation 370 at operation 381. The receiver may remove the signal estimation value of the target UE and perform modulation symbol-level estimation on the ICI. The embodiment of FIG. 3 is directed to a procedure of performing the modulation symbol-level estimation on the dominant interference (DI) among the ICIs. However, the present invention is not limited thereto, and it may also be possible to perform the modulation symbol-level estimation on multiple ICIs.

The receiver may perform operations 368 and 369 on the channel decoding output. It may be possible to use the channel decoding result output of operation 357 or 367. The receiver performs re-modulation on the channel decoding output at operation 368 and then M-point DFT at operation 369. The receiver may acquire a frequency domain signal estimation value of the target signal through this process.

The receiver may remove the target signal component from the received signal using the target signal and the fading channel estimation value of the target signal at operation 371. In this case, the remaining part of the received signal becomes ICI and noise. The receiver configures a frame with the same method as that used for generating the transmission signal and removes a value of a product of the estimation value of the fading channel of the target signal and the estimation value of the target signal per subcarrier from the received signal.

The receiver performs the modulation symbol-level estimation on the first DI to remove the first DI to the target signal. The receiver performs at operation 372 a direct MMSE-IRC based on the RB allocation information of the first DI and fading channel estimation value.

The $\hat{x}_k$ value of the first DI may be calculated using equation 4. Here, the [R] value may be calculated with

equation 5.

[Equation 4]

$$\hat{x}_k = \mathbf{W}_k \tilde{y}_k \quad \text{where} \quad \mathbf{W}_k = \mathbf{H}_{2,k}^H \mathbf{R}^{-1}$$

[Equation 5]

$$\mathbf{R} = \mathbf{H}_{2,k} \mathbf{H}_{2,k}^H + \beta_l \mathbf{H}_{1,k} \mathbf{H}_{1,k}^H \kappa_{1,k} + E \left[ \left( y_k - \mathbf{H}_{1,k} p_1 \kappa_{1,k} - \mathbf{H}_{2,k} p_2 \right) \left( y_k - \mathbf{H}_{1,k} p_1 \kappa_{1,k} - \mathbf{H}_{2,k} p_2 \right)^H \right]$$

$\tilde{y}_k$: IC results (cancellation of desired signal)

$\beta_l$: variance of residual IC error

Here, the IC residual error $\beta_l$ may be calculated as follows.

The receiver performs IC in the time domain using the ICI RB allocation information and estimates variance of the residual error value.

$\beta_l$ may be calculated using Equations 6 and 7.

[Equation 6]

$$\beta_l = E\left[ |x_k - \hat{x}_k|^2 \right] = \frac{1}{N_s} \sum_{k=1}^{N_s} \sum_{s_k} |s_k - \hat{s}_k|^2 \Pr(s_k \mid y_k)$$

[Equation 7]

$$\hat{s}_k = \sum_{s_k} s_k \Pr(s_k \mid y_k)$$

$N_s$: number of modulated symbol

$S_k$: candidate modulated symbol (constellation point)

$\tilde{s}_k$: Re-modulation output (soft modulation)

Next, the receiver performs $M_k$-point IDFT at operation 373 using the RB allocation information of the first DI and estimates a modulation order at operation 374 based on the IDFT result. The first DI modulation order may be estimated with various methods. For example, it may be possible to calculate log likelihood ratios of the respective candidate modulation orders at operation 375 and determine the case with the greatest absolute value average as the modulation order. At operation 376, the receiver calculates $\Pr(s_k \mid y_k)$ value of the first DI using the estimated first DI modulation order and $M_k$-point IDFT output and performs soft modulation again using the calculated value. At operations 375 and 376, it may be possible to use the ICI modulation order information.

Next, the receiver performs $M_k$-point DFT at operation 377 to configure a frame with the same method as that used for generating the transmission signal and recovers the received signal of the first DI by multiplying the frame by the per-subcarrier first DI fading channel estimation values. The recovered signal of the first DI may be used in operation 380. The ICI RB allocation information may be used at operation 377.

The receiver removes the first DI estimation value from the received signal at operation 381 and performs a direct MMSE-IRC on the target signal at operation 383. After removing the first DI value estimated in the operation 370 from the received signal, the receiver may perform a direct MMSE-IRC operation at operation 383 with the desired signal channel estimation information, ICI channel estimation information, and ICI RB allocation information using Equations 8 and 9.

[Equation 8]

$$\hat{x}_k = \mathbf{W}_k \bar{\mathbf{y}}_k \quad \text{where} \quad \mathbf{W}_k = \mathbf{H}_{1,k}^H \mathbf{R}^{-1}$$

$y_k$: IC results (cancellation of first dominant interference)

[Equation 9]

$$\mathbf{R} = \mathbf{H}_{1,k}\mathbf{H}_{1,k}^H + \beta_2 \mathbf{H}_{2,k}\mathbf{H}_{2,k}^H \kappa_{2,k} + E\left[ \left( \mathbf{y}_k - \mathbf{H}_{1,k}p_1 - \mathbf{H}_{2,k}p_2\kappa_{2,k} \right)\left( \mathbf{y}_k - \mathbf{H}_{1,k}p_1 - \mathbf{H}_{2,k}p_2\kappa_{2,k} \right)^H \right]$$

Next, the receiver performs M-point IDFT at operation 385 using the information on the resources allocated to the target UE, calculates a log-likelihood ratio at operation 387, and performs channel decoding at operation 389. The receiver performs a CRC test on the channel decoding output to determine whether the desired signal is decoded successfully.

Using the above-described method, the receiver can remove interference to decode successfully the uplink signal transmitted by the UE.

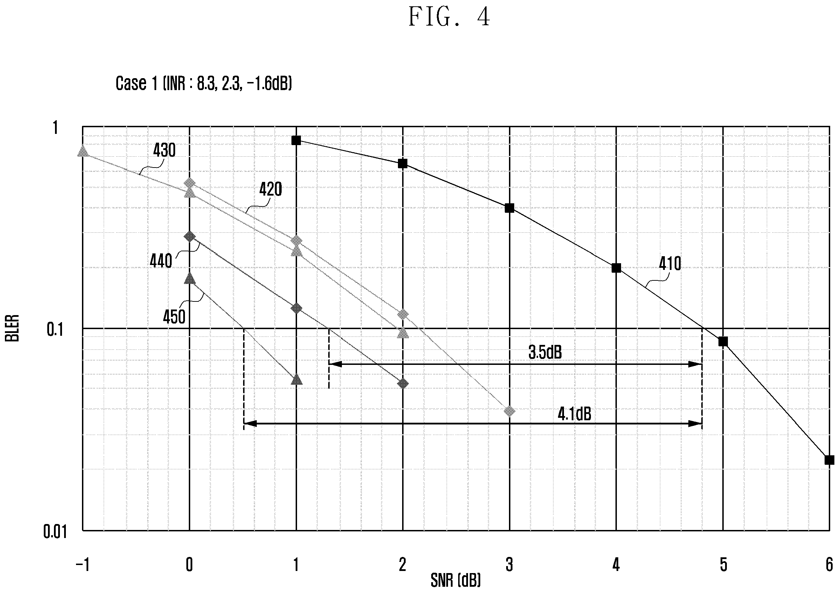

FIG. 4 is a graph for explaining effects of using the method according to the embodiment of FIG. 3. In the case of processing the received signal according to the embodiment of FIG. 3, it is possible to achieve dramatic improvement in performance in comparison with the conventional technology, as shown in FIG. 4.

In FIG. 4, the x-axis denotes the signal-to-noise ratio (SNR), and the y-axis denotes the Block Error Rate (BLER). In FIG. 4, the square marker indicates the performance in a network environment where the ICI estimation is blindly performed because the eNBs do not share the ICI information. Also, in FIG. 4, the triangle marker indicates the performance in a network environment where the eNBs share both the ICI RB allocation information and DMRS information.

The curve 410 shows the performance when only the conventional technology (indirect MMSE-IRC) is applied. The curves 420 and 430 show the performance when the Symbol-Level Interference Cancellation (SLIC) is applied to the first DI. The curves 440 and 450 show the performance when the SLIC is applied to the first DI and the second DI.

A comparison of the curves 410 and 440 shows that the proposed method can achieve a performance gain of about 3.5 dB. A comparison of the curves 410 and 450 shows that the proposed method can achieve a performance gain of about 4.1 dB.

Hereinafter, a description is made of the method for use of specific information on the interference signal according to an embodiment of the present invention. The signal reception method of an SC-FDMA uplink system according to an embodiment of the present invention differs from that of the OFDMA system. By the nature of the SC-FDMA system, it is necessary to use the information on all RBs allocated for the interference signal in cancelling interference for receiving the desired signals. In the OFDMA system, however, only the information on the RBs in which the target signal and the interference signal are overlapped in frequency is require for interference cancellation. In reference to the exemplary case of FIG. 1, interference cancellation may be performed using the information on the RBs of the third frequency region 180 as an overlap of the first and second frequency regions 160 and 170 in the OFDM system. In the case of the SC-FDMA system, however, it is impossible to perform interference cancellation with the information on only the RBs of the third frequency region 180. In the SC-FDMA system, the information on the entire RBs of the interference signal (i.e., RBs corresponding to the frequency region 170) is required to perform interference cancellation.

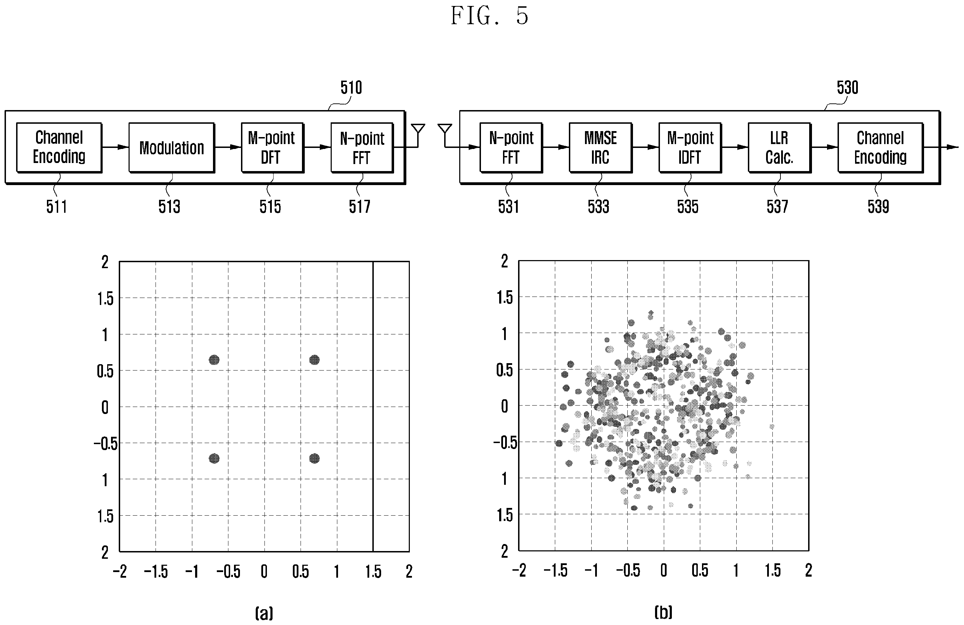

FIG. 5 is a diagram illustrating symbol level signal detection according to an embodiment of the present invention. In FIG. 5, reference number 510 denotes a signal transmission process of a transmitter, and reference number 530 denotes a signal reception process of a receiver. Here, the transmitter may be a UE, and the receiver may be an eNB.

The transmitter performs channel encoding at operation 511. The channel-decoded signal may a Quadrature Amplitude Modulation (QAM) signal as shown in part (a) of FIG. 5. Afterward, the transmitter performs modulation at operation 513 and M-point Discrete Fourier Transform (DFT) at operation 515 to output the signal in the form of part (b) of FIG. 5 and then performs N-point Fast Fourier Transform (FFT) thereon for transmission. at operation 517

The receiver receives the signal transmitted by the transmitter and performs N-Point FFT at operation 531 on the received signal. Since the received signal is not in the form of a QAM symbol after FFT, the receiver performs an MMSE-IRC at operation 533 and M-point Inverse Discrete Fourier Transform (IDFT) at operation 535. The signal after the M-point IDFT of operation 535 has a form of the QAM symbol as shown in part (a) of FIG. 5. Afterward, the receiver may decode the received signal successfully through LLR calculation of operation 537 and channel decoding of operation 539. In order to detect a symbol level interference signal, it is necessary to perform $M_k$-point IDFT on the RB region of the interference signal using the whole RB allocation information of the interference signal. If the whole RB allocation information of the interference signal is not available, the received signal after operation 535 may not be shown in the form of a QAM symbol (part (b) of FIG. 5). In an embodiment of the present invention, it may be possible to use interference signal information to detect the interference signal at the symbol level, and the interference signal information may be RB information associated with the interference signal. The RB information of the interference signal may be the information on all RBs allocated for the interference signal.

In an embodiment of the present invention, it may be possible to perform a symbol level interference cancellation operation with the RB information of the interference signal. The Symbol Level-Interference Cancellation (SL-IC) operation corresponds to the operation 370 of FIG. 3. In an embodiment of the present invention, it may be possible to perform the SL-IC using the information on all RBs allocated to the transmitter transmitting the interference signal colliding with the target signal (e.g., information on the RBs corresponding to the second frequency region in the example of FIG. 1) as well as the information on the RBs of the interference signal colliding with the target signal (e.g., information on the RBs corresponding to the third frequency region in the example of FIG. 1) as described above.

In an embodiment of the present invention, it may be possible to use the reference signal information and the RB allocation information of the interference signal in performing Frequency Domain Equalizer (FDE). The reference signal may include DMRS. The FDE may include the Interference Rejection Combining (IRC) technique. For example, the FDE may include channel compensation and receive antenna combination. The IRC may be the MMSE-IRC. In an embodiment of the present invention, it may be possible to estimate a fading channel value of the interference signal with the DMRS information and RB allocation information of the interference signal and use the estimation result directly (direct MMSE-IRC). That is, it may be possible to perform the channel compensation and receive antenna combining operation using the DMRS information and RB allocation of the interference signal.

It may be possible to perform the FDE by reflecting the channel information of the interference signal affecting each RB (or subcarrier) of the target signal using the RB allocation information of the interference signal. For example, if the target signal RB allocation situation differs from the interference signal RB allocation situation, this may be reflected. It may be possible to perform the IRC in the frequency domain by reflecting a statistical value of a residual error calculated in the time domain after IC with the ICI RB allocation information.

In an embodiment of the present invention, it may be possible to perform the $M_k$-point IDFT after the FDE. In the case of performing the $M_k$-point IDFT to detect ICI, it may be possible to determine the IDFT input value and size by reflecting the ICI RB allocation information. It may be possible to estimate the modulation order of the interference signal using the output of the $M_k$-point IDFT performed by reflecting the ICI RB allocation information.

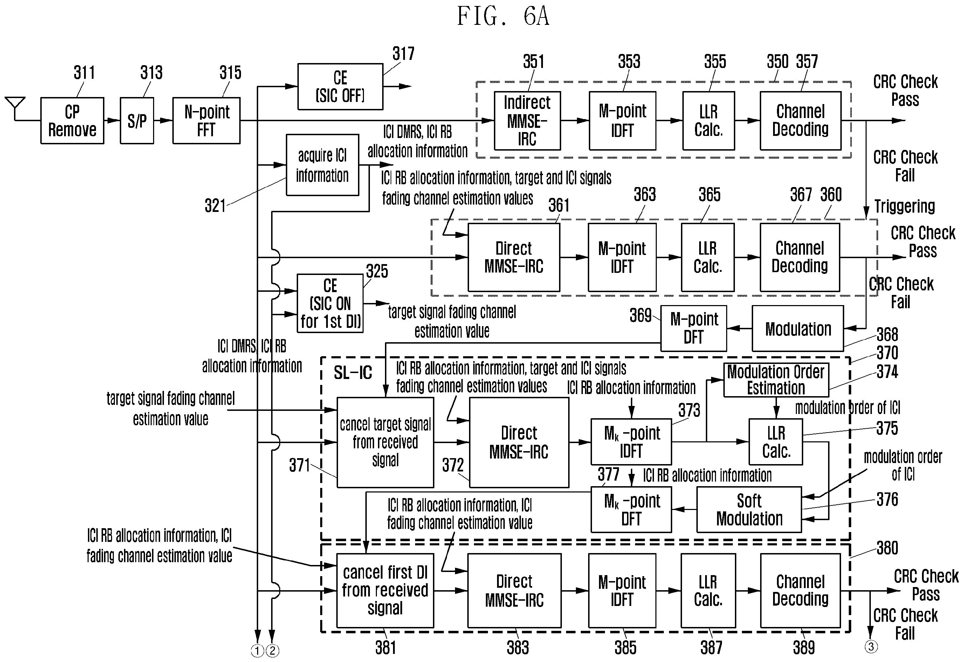

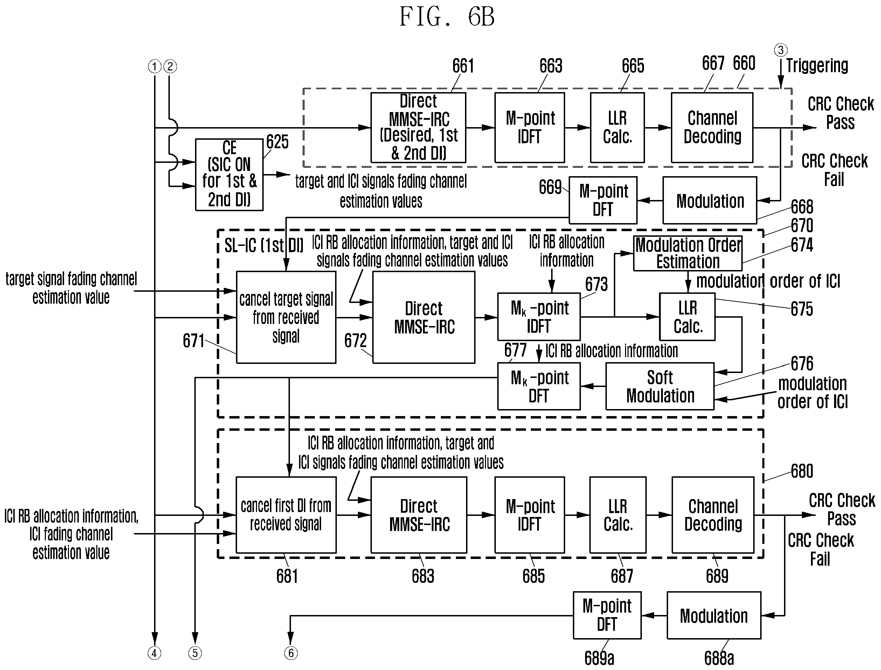

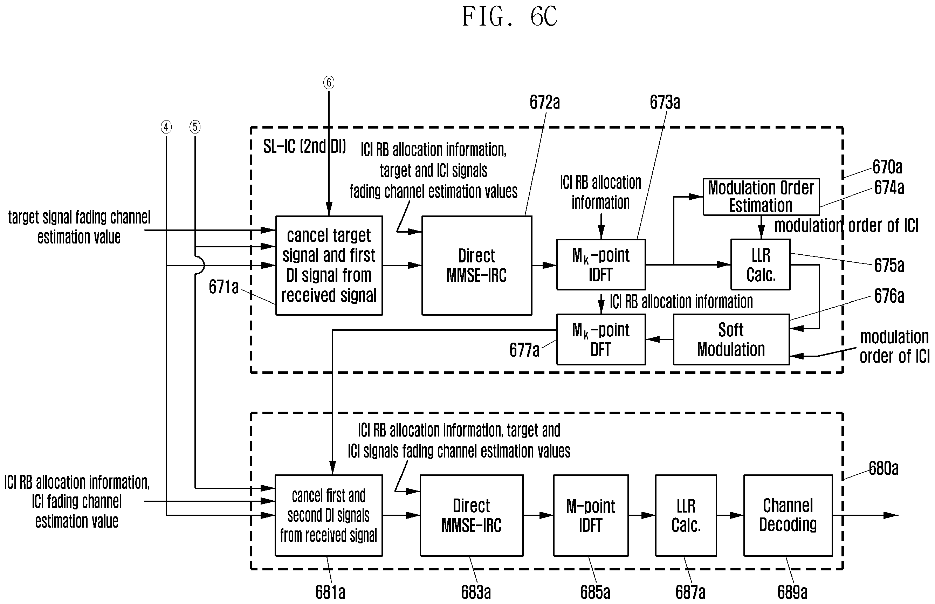

FIG. 6a, FIG. 6b and FIG 6c are a diagram illustrating a signal processing procedure for cancelling multiple interferences by expanding the procedure of FIG. 3.

It is identical with the embodiment of FIG. 3 in relation to acquiring the target signal by cancelling the first Dominant Interference (DI) among the ICIs. That is, operations 311 to 380 of FIG. 3 may be identically applied to the embodiment of FIG. 6. In the embodiment of FIG. 6, a description is made of the operation subsequent to operation 380. It may be possible to perform a CRC test on the output of the channel decoding of operation 380. If the CRC test fails, the receiver may perform the operations 660, 670, and 680.

First, a description is made of operation 625. The receiver acquires ICI information and performs fading channel estimation on the desired signal and ICI signal using the acquired ICI information at operation 625. The receiver may perform the fading channel estimation on multiple interference signals (at least two interference signals). Since the conventional methods for fading channel estimation (Least Square Estimation + IC on DMRS, 1D or 2D MMSE estimation + IC on DMRS, and Wiener filtering + IC on DMRS) have been described above, detailed descriptions thereof are omitted herein. Although the embodiment of FIG. 6 is directed to the case of performing the direct MMSE-IRC and SL-IC on two interference signals, the number of interference signals can be increased.

Afterward, the receiver performs operation 660. After channel estimation, the receiver may perform the direct MMSE-IRC with the channel estimation information and ICI RB allocation information at operation 661. During the channel estimation, it may be possible to perform Successive Interference Cancellation. The direct MMSE-IRC operation may be performed by simply extending the above-described Equations 2 and 3.

Next, the receiver performs M-point IDFT at operation 663 using the information on the resources allocated to the target UE, calculates a log-likelihood ratio at operation 665, and performs channel decoding at operation 667. The receiver performs a CRC test on the channel decoding output to determine whether the desired signal is decoded successfully. If the CRC test fails, this means that the receiver fails in decoding or demodulating the desired signal because of an interference signal.

If the CRC test fails, this may trigger the operation 670 of the receiver. The receiver may perform symbol-level interference cancellation (SL-IC) using the result of the operation 670 at operation 681. The receiver may remove the signal estimation value of the target UE and perform modulation symbol-level estimation on the ICI at operation 670. For example, the receiver may perform SL-IC on the dominant interference (DI) among the ICIs.

The receiver may perform the operations of operations 668 and 669 on the channel decoding output. It may be possible to use at least one of the channel decoding outputs as described with reference to FIG. 6. It may be preferable to use the channel decoding output of operation 667 of FIG. 6.
The receiver performs re-modulation on the channel decoding output at operation 668 and then M-point DFT at operation 669. The receiver may acquire a frequency domain signal estimation value of the target signal through this process.

The receiver may remove the target signal component from the received signal using the target signal and the fading channel estimation value of the target signal at operation 671. In this case, the remaining part of the received signal becomes ICI and noise. The receiver configures a frame with the same method as that used for generating the transmission signal and removes a value of the product of the estimation value of the fading channel of the target signal and the estimation value of the target signal per subcarrier from the received signal.

The receiver performs modulation symbol-level estimation on the first DI to remove the first DI to the target signal in operation 670. The receiver performs a direct MMSE-IRC at operation 672 based on the RB allocation information of the first DI and fading channel estimation value.

Equations 4 to 7 may be simply extended for use in operation 670. Next, the receiver performs Mk-point IDFT at operation 673 using the RB allocation information of the first DI and estimates the modulation order at operation 674 based on the IDFT result. The first DI modulation order may be estimated with various methods. For example, it may be possible to calculate log likelihood ratios of the respective candidate modulation orders at operation 675 and determine the case with the greatest absolute value average as the modulation order. The receiver calculates $\Pr(s_k \mid y_k)$ value of the first DI at operation 676 using the estimated first DI modulation order and $M_k$-point IDFT output and performs soft re-modulation with the calculation result as follows.

Next, the receiver performs $M_k$-point DFT at operation 677 to configure a frame with the same method as that used for generating the transmission signal and recovers the received signal of the first DI by multiplying the frame by the per-subcarrier first DI fading channel estimation values. The received signal of the first DI may be used in operation 680. The ICI RB allocation information may be used at operation 677.

The receiver removes the first DI estimation value from the received signal at operation 681 and performs a direct MMSE-IRC on the target signal at operation 683. After removing the first DI value estimated in the operation 670 from the received signal, the receiver may perform a direct MMSE-IRC operation at operation 683 with the desired signal channel estimation information, ICI channel estimation information, and ICI RB allocation information. Equations 8 and 9 may be simply extended for use in the operation at operation 683.

Next, the receiver performs M-point IDFT at operation 685 using the information on the resources allocated to the target UE, calculates a log-likelihood ratio at operation 687, and performs channel decoding at operation 689. The receiver performs a CRC test on the channel decoding output to determine whether the desired signal is decoded successfully.

If the CRC test fails, this may trigger the operations 670a and 680a of the receiver to cancel the second DI. This is the case of trying to perform the target signal decoding after removing other interferences (e.g., second DI) because it is impossible to decode the signal correctly in the state that only the first DI is removed.

The receiver may perform the operations of operations 668a and 689a on the channel decoding output. It may be possible to use at least one of the channel decoding outputs as described with refence to FIG. 6. It may be preferable to use the channel decoding output of operation 689 of FIG. 6. The receiver performs re-modulation and M-point DFT on the channel decoding output in series at operations 668a and 689a. The receiver may acquire a frequency domain signal estimation value of the target signal through this process.

The receiver may remove the target signal component from the received signal using the target signal and the fading channel estimation value of the target signal at operation 671 a. The receiver configures a frame with the same method as that used for generating the transmission signal and removes a value of the product of the estimation value of the fading channel of the target signal and the estimation value of the target signal per subcarrier from the received signal.

The receiver performs modulation symbol-level estimation on the second DI to remove the second DI to the target signal in operation 670a. The receiver performs a direct MMSE-IRC based on the RB allocation information of the second DI and fading channel estimation value at operation 672a.

Equations 4 to 7 may be simply extended for use in operation 670a. Next, the receiver performs $M_k$-point IDFT at operation 673a using the RB allocation information of the second DI and estimates the modulation order at operation 674a based on the IDFT result. The second DI modulation order may be estimated with various methods. For example, it may be possible to calculate log likelihood ratios of the respective candidate modulation orders at operation 675a and determine the case with the greatest absolute value average as the modulation order. The receiver calculates $\Pr(s_k \mid$

$y_k$) value of the second DI using the estimated second DI modulation order and $M_k$-point IDFT output and performs soft re-modulation with the calculation result, as follows, at operation 676a.

Next, the receiver performs $M_k$-point DFT at operation 677a to configure a frame with the same method as that used for generating the transmission signal and recovers the received signal of the second DI by multiplying the frame by the per-subcarrier first DI fading channel estimation values. The received signal of the second DI may be used in operation 680a. The ICI RB allocation information may be used at operation 677a.

The receiver removes the estimation values of the first and second DIs from the received signal at operation 681a and performs the direct MMSE-IRC on the target signal at operation 683a. Equations 8 and 9 may be simply extended for use in the operation at operation 683a.

Next, the receiver performs M-point IDFT at operation 685a using the information on the resources allocated to the target UE, calculates a log-likelihood ratio at operation 687a, and performs channel decoding at operation 689a. The receiver performs a CRC test on the channel decoding output to determine whether the desired signal is decoded successfully.

If the CRC test fails, it may be possible to perform decoding after removing other interference signals. For example, the operations 670a and 680a may be performed on the third DI.

The above embodiment of the present invention is directed to the interference cancellation method including removing the dominant interference signal with priority among a plurality of interference signals, performing a CRC test, and removing, when the CRC test fails, the next dominant interference. However, the present invention is not limited by the order of interference signals to be removed.

It should be noted that FIGs. 3 and 6 are just preferred embodiments of the present invention and the operation of each operation may or may not be performed independently for the embodiment of FIG. 3 or 6.

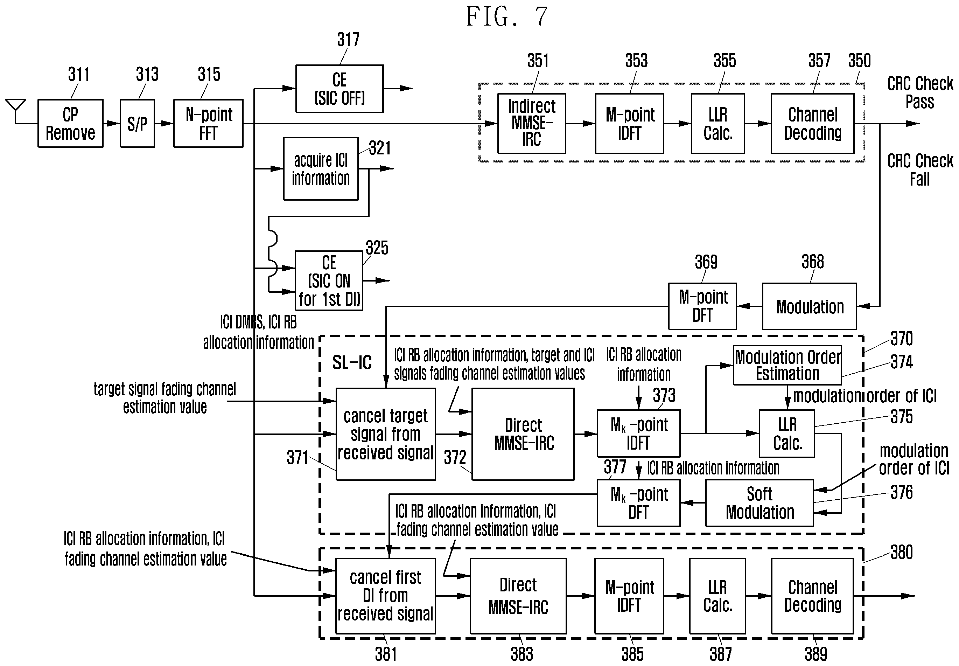

FIG. 7 is a diagram illustrating a signal processing procedure being performed without the direct MMSE-IRC operation in the embodiment of FIG. 3, and FIG. 8a, FIG. 8b, FIG. 8c, FIG. 9a and FIG. 9b are diagrams illustrating signal processing procedures being performed without the direct MMSE-IRC operation in the procedure of FIG. 6.

The procedure of FIG. 7 is identical with that of FIG. 3 with the exception of the omission of operation 360. Accordingly, detailed descriptions of the operations that are identical in FIGs. 3 and 7 are omitted herein.

The receiver may decode the received signal at operation 357 of operation 350. The receiver performs a CRC test on the channel decoding output to determine whether the desired signal is decoded successfully. If the CRC test fails, this means that the receiver fails in decoding or demodulating the desired signal because of an interference signal. Unlike the embodiment of FIG. 3 in which the receiver performs operation 360 when the CRC test fails, operation 360 is not performed in the embodiment of FIG. 7. The receiver performs the operations of operations 368 and 369 on the channel decoding output that results from operation 357 without direct MMSE-IRC. The receiver performs re-modulation and $M_1$-point DFT on the channel decoding output at operations 368 and 369 in series. The receiver may acquire a frequency domain signal estimation value of the target signal through these operations.

Afterward, the receiver performs operations 370 and 380 as described with reference to FIG. 3. That is, the receiver removes the target signal component from the received signal and performs SL-IC to cancel a symbol level interference (e.g., first DI), and decodes the target signal as described with reference to FIG. 3.

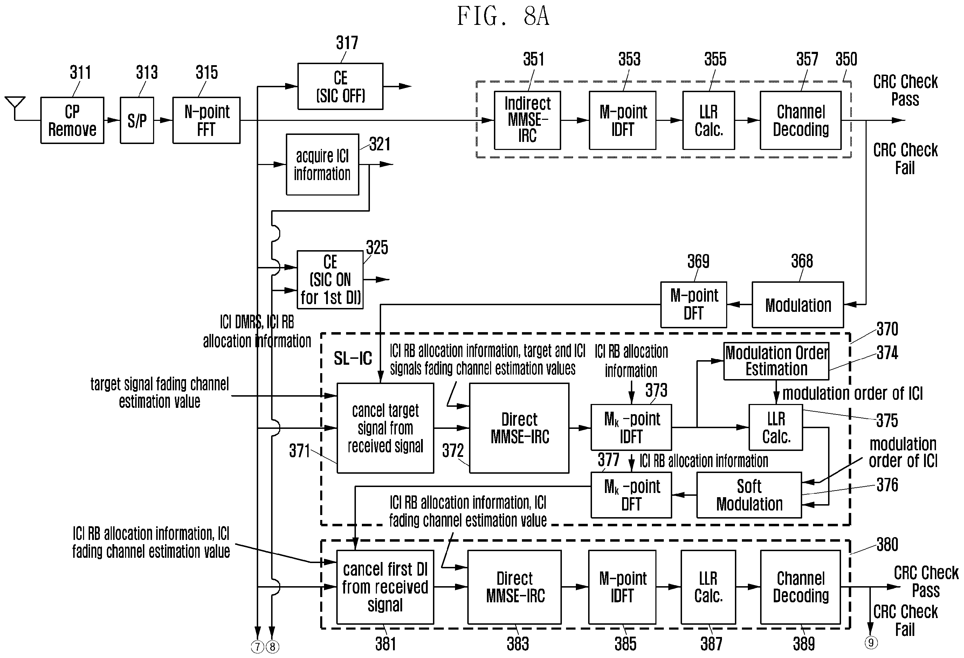

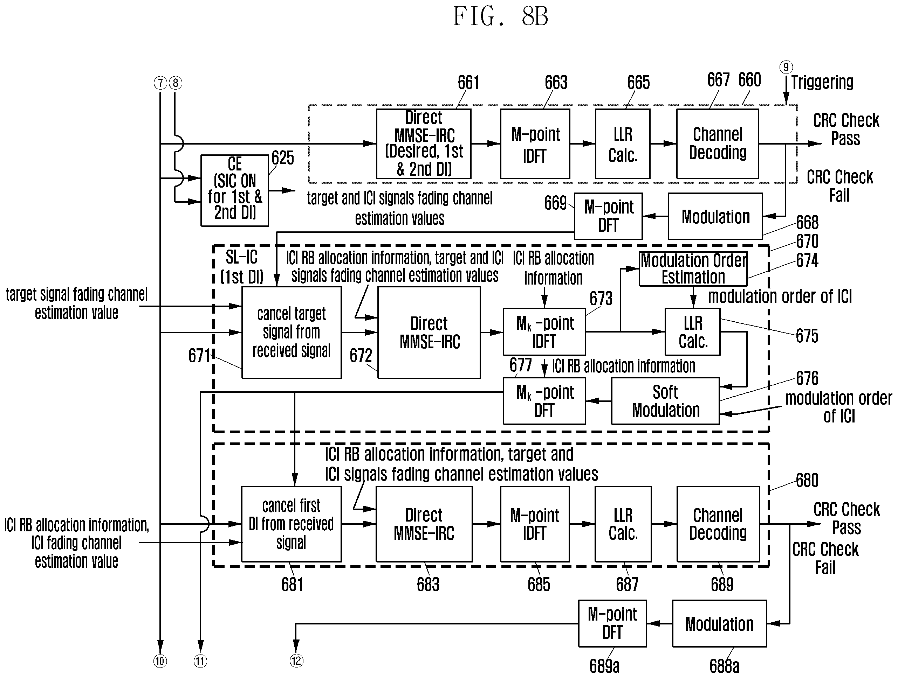

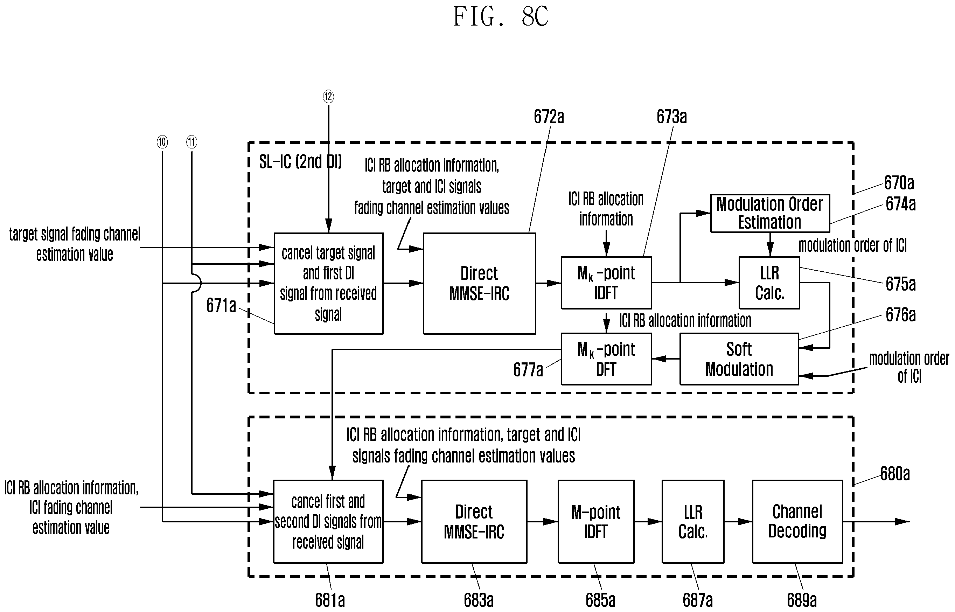

The embodiment of FIG. 8a, FIG. 8b, and FIG. 8c are identical with that of FIG. 6 with the exception of the omission of operation 360. Accordingly, detailed descriptions of the operations that are identical in FIGs. 6 and 7 are omitted herein.

The receiver may decode the received signal at operation 357 of operation 350. The receiver performs a CRC test on the channel decoding output. Unlike the embodiment of FIG. 6 in which the receiver performs operation 360 when the CRC test fails, operation 360 is not performed in the embodiment of of FIG. 8a, FIG. 8b, and FIG. 8c. The receiver performs the operations of operations 368 and 369 on the channel decoding output that results from operation 357 without direct MMSE-IRC. The receiver performs re-modulation and M-point DFT on the channel decoding output at operations 368 and 369 in series. The receiver may acquire a frequency domain signal estimation value of the target signal through these operations. The subsequent operations are performed in the same manner as described with reference to FIG. 6.

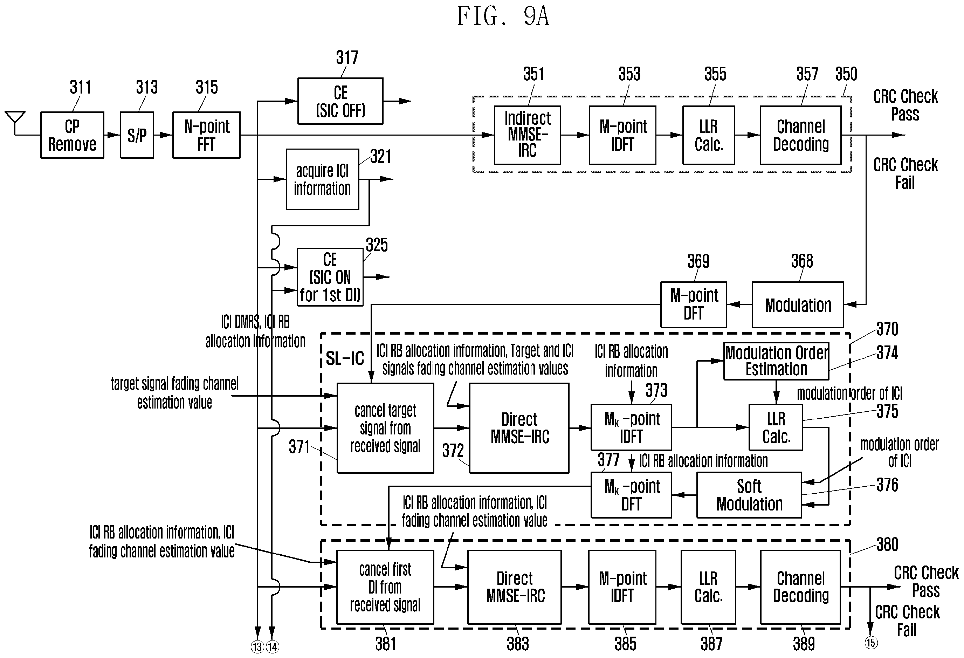

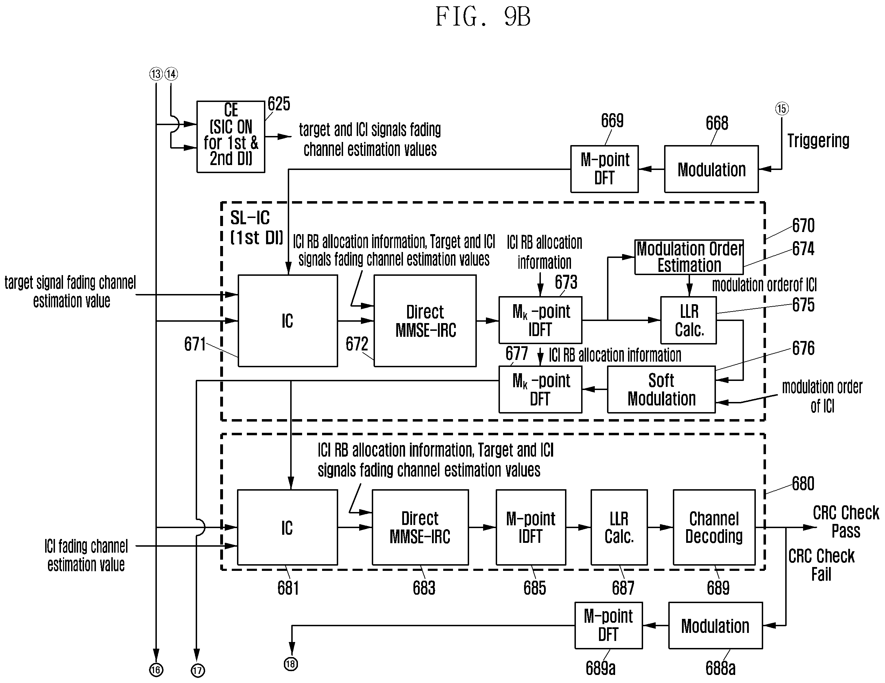

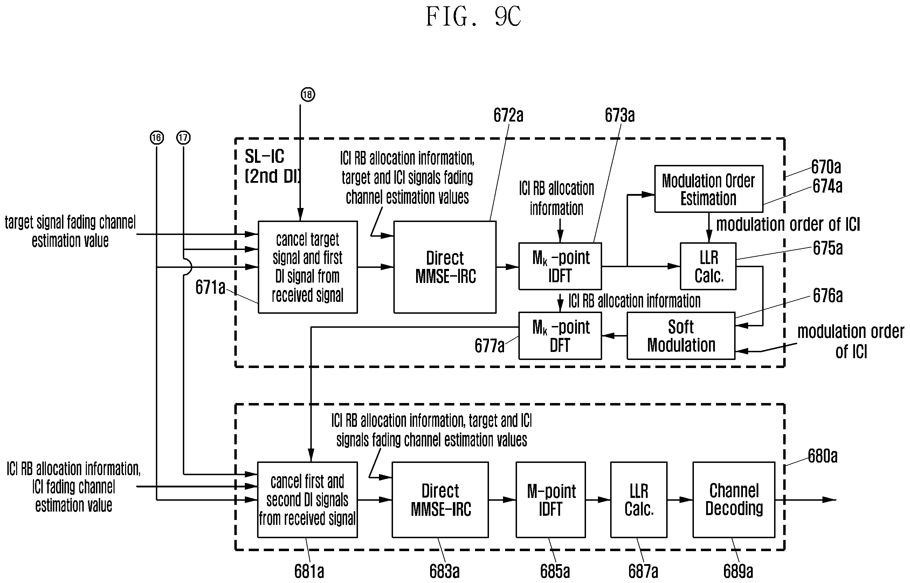

The embodiment of FIG. 9a, FIG. 9b, and FIG. 9c are identical with that of FIG. 8 with the exception of the omission of operation 660. Accordingly, detailed descriptions of the operations that are identical in FIGs. 8 and 9 are omitted herein. In the embodiment of FIG. 8, if the CRC test on the decoding output that results from operation 367 fails, the receiver performs operation 660. Unlike the embodiment of FIG. 8, the receiver skips operation 660 and performs the operation of operation 668 in the embodiment of FIG. 9. Here, the input for the operation of operation 668 may be changed. Unlike the embodiment of FIG. 8 in which the decoding output that results from operation 660 is input for the operation of operation 668, the decoding output of operation 389 may be input for the operation of operation 668 in the embodiment of FIG. 9. The operations subsequent to operation 668 are identical with those in the embodiment of FIG. 8.

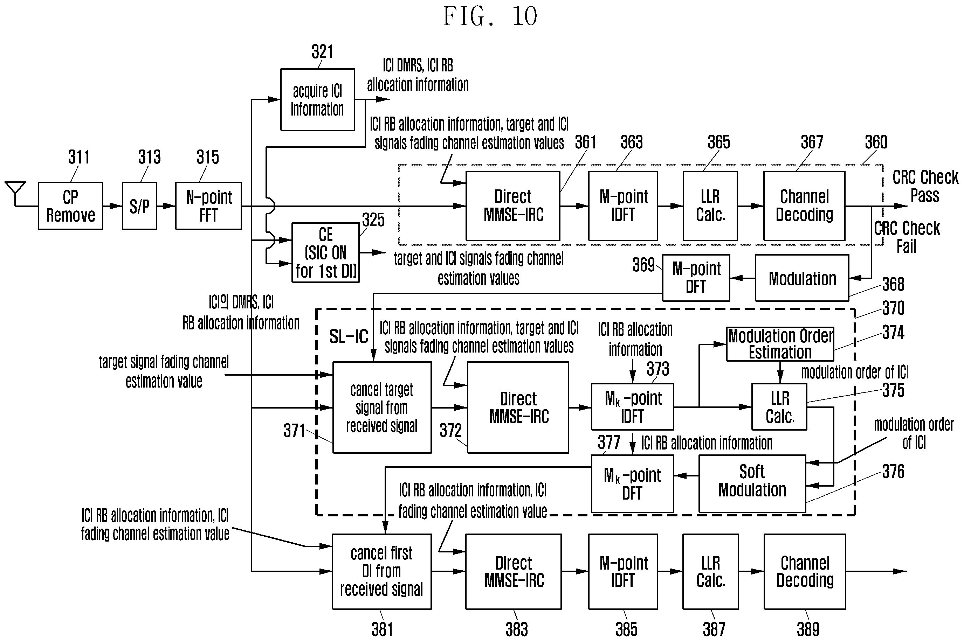

FIG. 10 is a diagram illustrating a signal processing procedure being performed without the indirect MMSE-IRC operation in the embodiment of FIG. 3. Unlike the embodiment of FIG. 3 in which the receiver performs indirect MMSE-IRC on the fading channel estimated from the desired signal and, if the result is a fail, performs the subsequent operations from operation 360, in the embodiment of FIG. 10 the indirect MMSE-IRC operation is omitted. It may also be possible to omit the channel estimation operation on the desired signal at operation 317. Since the indirect MMSE-IRC operation is performed only with the desired signal information and not with the interference signal information, the decoding failure probability is high. Accordingly, the indirect MMSE-IRC operation is skipped.

The receiver may estimate a fading channel of the desired signal and interference signals at operation 325 and perform subsequent operations such as direct MMSE-IRC. The subsequent operations are performed as described with reference to FIG. 3. That is, the receiver performs a direct MMSE-IRC operation with the channel estimation information and then a CRC test on the decoding output following the MMSE-IRC. If the CRC test fails, the receiver removes the target signal from the received signal and performs the SL-IC operation on the interference signal. After removing the target signal from the received signal, the receiver performs a symbol level estimation operation on the interference signal. Next, the receiver removes the symbol level estimation result from the received signal and performs decoding on the target signal.

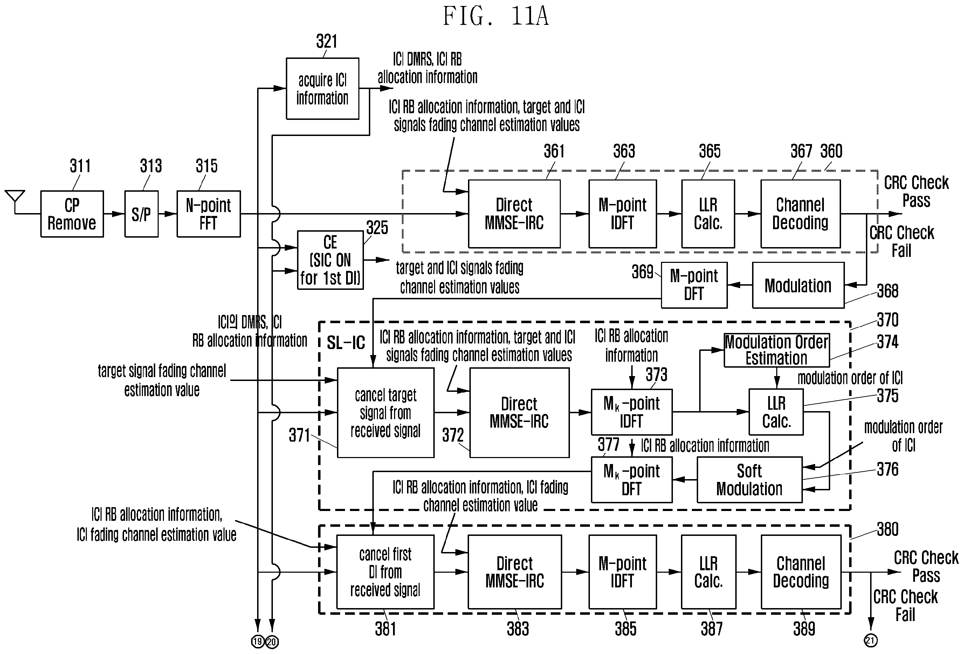

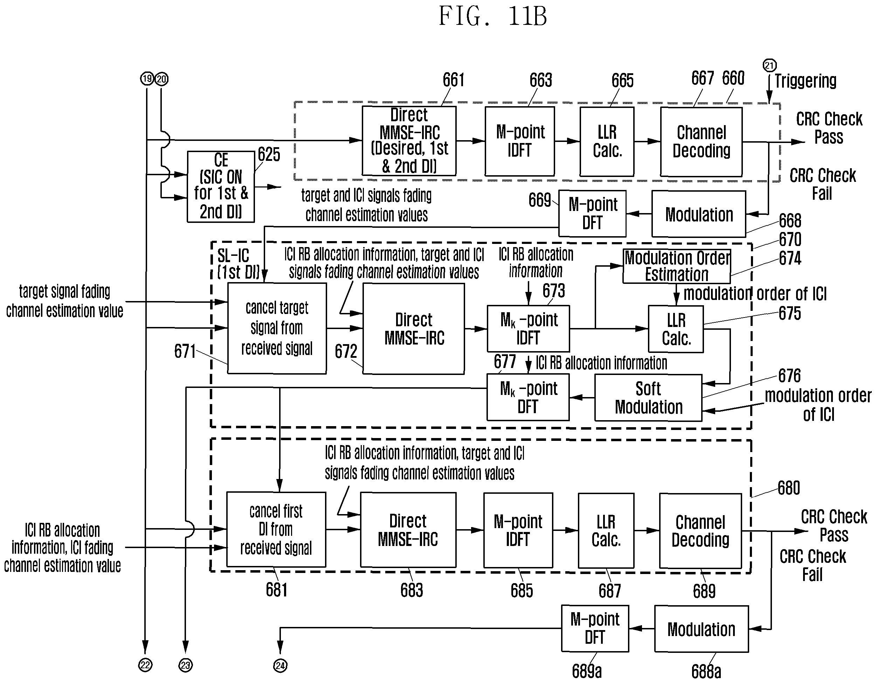

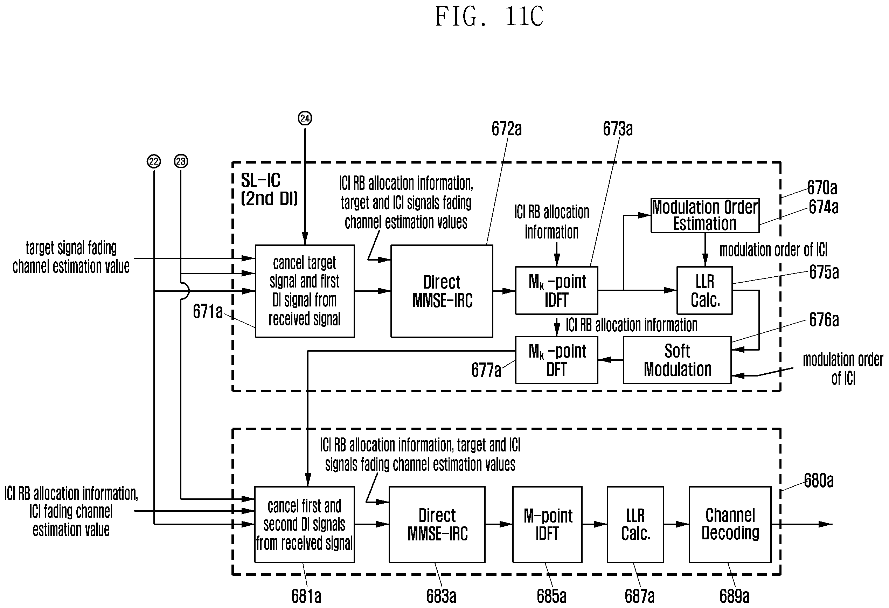

FIG. 11a, FIG. 11b, and FIG. 11c are a diagram illustrating a signal processing procedure being performed without the indirect MMSE-IRC operation in the embodiment of FIG. 6. The embodiment of FIG. 11 is similar to that of FIG. 10. In FIG. 11, it may also be possible to omit the channel estimation operation of operation 317 and the indirect MMSE-IRC operation. The channel estimation and indirect MMSE-IRC operations are omitted as described with reference to FIG. 10. The subsequent operations are performed in the same manner as described with refence to FIG. 6.

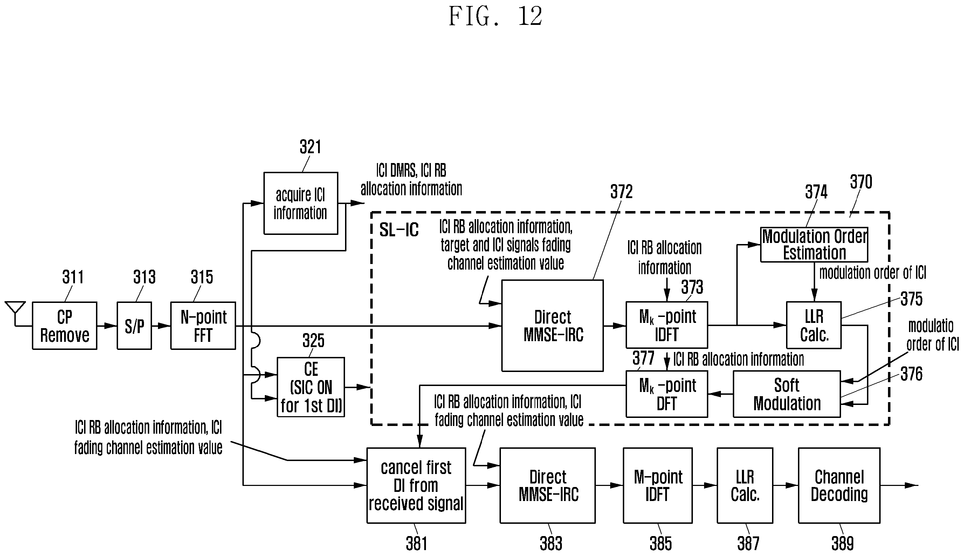

FIG. 12 is a diagram illustrating a signal processing procedure being performed without the indirect MMSE-IRC and direct MMSE-IRC operations in the embodiment of FIG. 3. In the embodiment of FIG. 12, the receiver performs SL-IC on the interference signal based on the ICI information and interference signal fading channel estimation information to decode the target signal.

In reference to FIG. 12, operations 350 and 360 of the embodiment of FIG. 3 are omitted. The receiver acquires ICI information at operation 321 and estimates fading channels of the desired signal and interference signals at operation 325. The receiver may perform the SL-IC operation based on the ICI information and fading channel estimation information.

The receiver performs the direct MMSE-IRC at operation 372 based on the RB allocation information of the first DI and fading channel estimation value. Next, the receiver performs $M_k$-point IDFT at operation 373 using the RB allocation information of the first DI and estimates a modulation order at operation 374 based on the IDFT result. The first DI modulation order may be estimated with various methods. For example, it may be possible to calculate log likelihood ratios(LLRs) of the respective candidate modulation orders at operation 375 and determine the case with the greatest absolute value average as the modulation order. At operation 376, the receiver calculates $Pr(s_k \mid y_k)$ value of the first DI using the estimated first DI modulation order and $M_k$-point IDFT output and performs soft modulation. At operations 375 and 376, it may be possible to use the ICI modulation order information.

Next, the receiver performs $M_k$-point DFT at operation 377 to configure a frame with the same method as that used for generating the transmission signal and recovers the received signal of the first DI by multiplying the frame by the per-subcarrier first DI fading channel estimation values. The recovered signal of the first DI may be used in a subsequent operation. The ICI RB allocation information may be used at operation 377.

The receiver removes the first DI estimation value from the received signal at operation 381. That is the receiver performs the interference cancellation operation on the received signal. The receiver performs a direct MMSE-IRC on the target signal at operation 383. The receiver performs the direct MMSE-IRC operation at operation 383 using the desired signal channel estimation information and ICI RB allocation information. Next, the receiver performs M-point IDFT at operation 385 using the information on the resources allocated to the target UE, calculates a log-likelihood ratio at operation 387, and performs channel decoding at operation 389. The receiver performs a CRC test on the channel decoding output to determine whether the desired signal is decoded successfully. Using the above-described method, the receiver can remove interference to decode the uplink signal transmitted by the UE successfully.

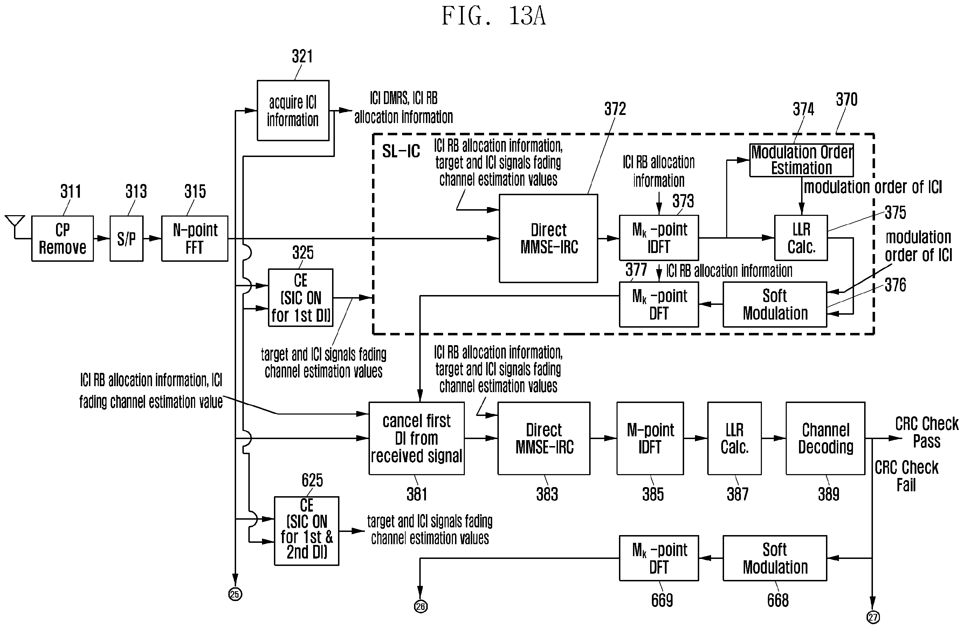

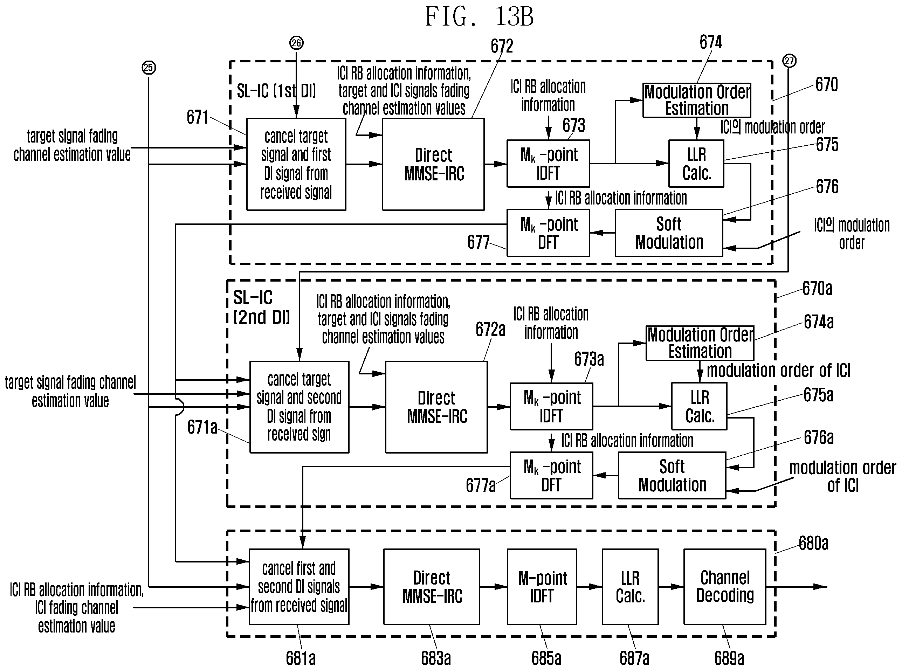

FIG. 13a and FIG. 13b are a diagram illustrating a signal processing procedure being performed without the indirect MMSE-IRC and direct MMSE-IRC operations in the embodiment of FIG. 6. The embodiment of FIG. 13 is directed to a method of performing the SL-IC on the multiple interference signals by expanding the embodiment of FIG. 12.

If the CRC test on the decoding output of operation 389 fails, the receiver performs the operations of operations 668 and 669.

The receiver may perform symbol level estimation on the first and second DIs based on the operations 670 and 670a. The SL-IC operation has been described above; thus, a detailed description thereof is omitted herein. The receiver may perform symbol level estimation on the first and second DIs according to the respective operations 670 and 670a.

Next, the receiver may perform operation 680a. At operation 681a, the receiver may remove the symbol level estimation values of the first and second DIs that are respectively acquired through operations 670 and 670a. The receiver performs direct MMSE-IRC on the target signal at operation 683a. The receiver performs the direct MMSE-IRC operation at operation 683a using the desired signal channel estimation information and the ICI RB allocation information. Next, the receiver performs M-point IDFT at operation 685a using the information on the resources allocated to the target UE, calculates a log-likelihood ratio at operation 687a, and performs channel decoding at operation 689a. The receiver performs a CRC test on the channel decoding output to determine whether the desired signal is decoded successfully. Using the above-described method, the receiver can remove interference to decode the uplink signal transmitted by the UE successfully.

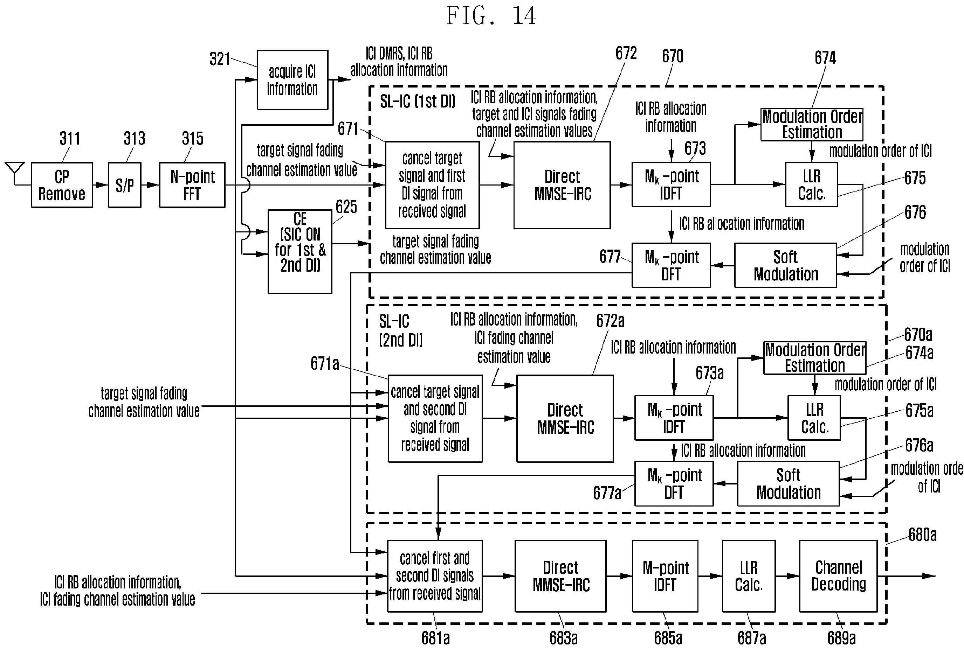

FIG. 14 is a diagram illustrating a modified embodiment of the embodiment of FIG. 13. The embodiment of FIG. 13 is characterized by performing SL-IC on the first DI, a CRC test on the channel decoding result, and then an IC operation on multiple DIs. In the embodiment of FIG. 14, however, the receiver performs SL-IC on multiple interference signals in the first cycle rather the performing the SL-IC on the multiple interference signals after the LS-IC on one interference signal. In comparison with the embodiment of FIG. 13, the embodiment of FIG. 14 is characterized in that no operation corresponding to operation 370 is performed. The receiver may perform operations 670 and 670a rather than operation 370.

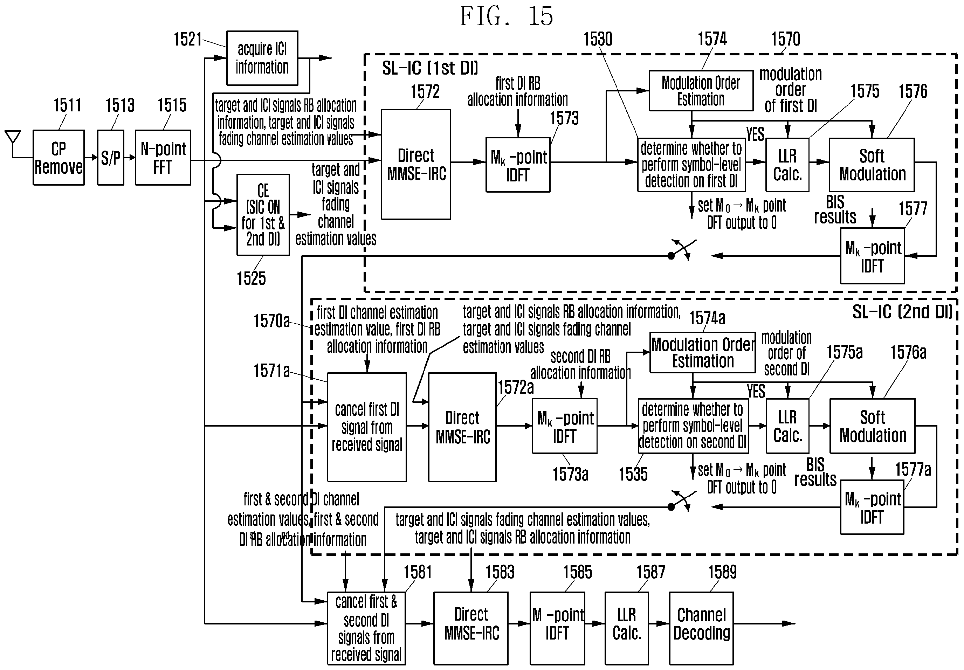

FIG. 15 is a diagram illustrating a signal processing procedure for improving the channel decoding performance by predicting reliability of an estimation value according to an embodiment of the present invention. In reference to FIG. 15, the receiver may perform Cyclic Prefix (CP) removal at operation 1511, a Serial/Parallel (S/P) conversion at operation 1513, and an N-point Fast Fourier Transform (FFT) at operation 1515.

The receiver may acquire ICI information at operation 1521. The receiver may perform channel estimation on the interference channel using specific information as part of the ICI information. The specific information may include at least one of ICI RB allocation information and DMRS information. The receiver may acquire the ICI information from the signal transmitted by a UE. The receiver may also acquire the ICI information from its serving eNB.

The receiver acquires the ICI information and performs fading channel estimation on the desired signal and the ICI signal at operation 1525. The interference signal fading channel estimation may be performed on multiple interference signals. In FIG. 15, it is assumed that the interference signal fading channel estimation is performed on the first and second DIs. Afterward, the SL-IC may be performed on at least one interference signal.

After channel estimation, the receiver performs direct MMSE-IRC using the channel estimation information and ICI RB allocation information as follows. The receiver may perform the direct MMSE-IRC at operation 1572 for channel compensation and interference suppression in association with the first DI. The receiver may perform the direct MMSE-IRC based on the RB allocation information and fading channel estimation values associated with the target signal and the first and second DIs. Next, the receiver performs $M_k$-point IDFT at operation 1573 with the RB allocation information of the first DI and estimates at operation 1574 modulation order based on the IDFT result.

The receiver may determine whether to perform symbol level detection on the first DI at operation 1530. The receiver may determine whether to perform the symbol level detection based on at least one of the outputs of operations 1573 and 1574. For example, the receiver may estimate the Signal-to-Interference plus Noise Ratio (SINR) of the first DI using the Mk-point IDFT output and determine the reliability of the symbol level detection on the first DI based on the combination of the estimation result and the first DI modulation order information. The receiver may check whether a threshold condition is fulfilled to determine whether the reliability is high or low. The receiver may set a threshold value of the SINR corresponding to the modulation order. If the SINR corresponding to the modulation order is less than a preset threshold value, the receiver may determine that the reliability is low. In the case that the modulation order of the first DI is 16QAM, if the SINR is less than the SINR threshold corresponding to the 16QAM, the receiver determines that the reliability is low.

If it is determined that the reliability is greater than the threshold value, the receiver calculates a log-likelihood ratio (LLR) at operation 1575 and performs soft re-modulation using the LLR at operation 1576. Next, the receiver performs Mk-point DFT at operation 1577. The receiver configures a frame with the same method as that used for generating the transmission signal and recovers the received signal of the first DI by multiplying the frame by the per-subcarrier first DI fading channel estimation values.

If it is determined that the threshold is less than the preset threshold value, the receiver does not perform any further symbol level estimation on the first DI. The receiver may not reflect the first DI symbol level estimation value. The receiver may also set the $M_k$-point DFT output to 0.

Although the operation of operation 1530 is described in the embodiment of FIG. 15, it may be possible to add an embodiment for performing the operation of operation 1530 based on the outputs of the $M_k$-point IDFT and modulation order estimation blocks in the above-described embodiments including the SL-IC operation.

The receiver may perform operation 1570a after operation 1570. In operation 1571a, the receiver may remove the first DI signal acquired at operation 1570. The first DI to be removed from the received signal may be present or not according to the result of operation 1530.

The receiver performs a direct MMSE-IRC process using the channel estimation information and ICI RB allocation information. The receiver may perform the direct MMSE-IRC for channel compensation and interference suppression in association with the second DI at operation 1572a. The receiver may perform the direct MMSE-IRC process based on the RB allocation information and fading channel estimation value associated with the target signal and the first and second DIs . Next, the receiver performs $M_k$-point IDFT at operation 1573a using the second DI RB allocation information and estimates modulation order at operation 1574a based on the IDFT result.

The receiver may determine whether to perform symbol level detection on the second DI at operation 1535. The receiver may determine whether to perform the symbol level detection based on at least one of the outputs of operations 1573a and 1574a. If it is determined that the reliability is greater than the threshold value, the receiver calculates a log-likelihood ratio (LLR) at operation 1575a and performs soft re-modulation using the LLR at operation 1576a. Next, the receiver performs Mk-point DFT at operation 1577a. The receiver configures a frame with the same method as that used for generating the transmission signal and recovers the received signal of the second DI by multiplying the frame by the per-subcarrier second DI fading channel estimation values.

If it is determined that the threshold is less than the preset threshold value, the receiver does not perform any further symbol level estimation on the second DI. The receiver may not reflect the second DI symbol level estimation value. The receiver may also set the $M_k$-point DFT output to 0.

The receiver removes the first and second DI signals from the received signal at operation 1581. The receiver may use the first and second DI symbol level estimation values, channel estimation values, and RB allocation information.

The receiver may perform the direct MMSE-IRC operation for channel compensation and interference suppression for the target signal at operation 1583. The receiver may use the RB allocation information and fading channel coefficient information of the target signal and the first and second DIs. The information to be applied per interference signal at operation 1583 may be determined according to the result of the determination at operation 1530 or 1535. For example, if it is determined at operation 1530 that the reliability of the estimation value of the first DI is low, the estimation value of the first DI may not be used at operation 1583. Also, if it is determined at operation 1535 that the reliability of the estimation value of the second DI is low, the estimation value of the second DI may not be used at operation 1583. Meanwhile, if it is determined that the reliabilities of the estimation values of all interference signals intended to be considered are low, the interference information is not used at operations 1581 and 1583. In this case, the receiver may perform the indirect MMSE-IRC operation 380 of FIG. 3.

The receiver may perform M-point DFT on the target signal at operation 1585. The receiver may use the RB allocation information of the target signal. Next, the receiver may calculate the LLR of the target signal at operation 1587 and perform channel decoding at operation 1589.

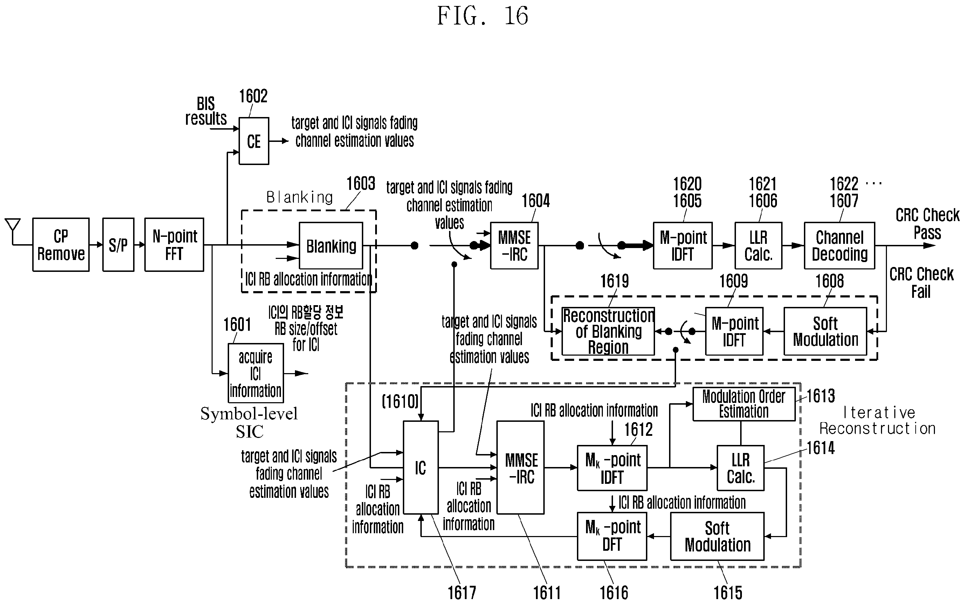

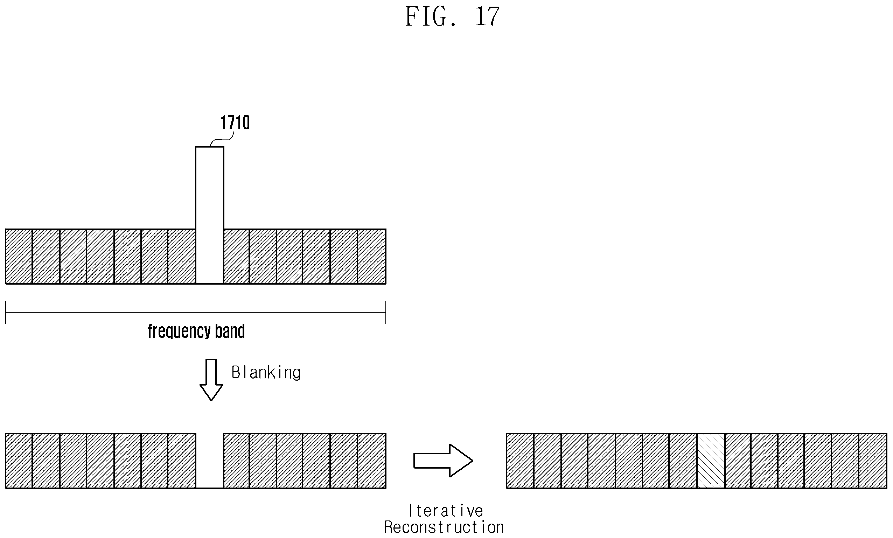

FIG. 16 is a diagram illustrating a signal processing procedure including an interference suppression technique according to an embodiment of the present invention, and FIG. 17 is a diagram for explaining a blanking technique.

For the embodiment of FIG. 16, the blanking technique is described first. In reference to FIG. 17, the blanking technique is performed in such a way of removing a part being affected by a narrowband DI 1710 from the target signal, performing channel decoding on the IDFTed target signal, and recovering the IDFT input. By removing a part of the received signal and compensating for the removed part iteratively in the frequency domain, it is possible to improve the performance. The number of iterations of the blanking operation may be preconfigured. The blanking technique is advantageous in terms of reducing the influence of narrowband interference, but it may be vulnerable to broadband interference. The embodiment of FIG. 16 is directed to a method of using the blanking technique for narrowband interference based on the RB allocation information of the interference signal and the symbol level interference cancellation (SL-IC) technique for broadband interference.

In reference to FIG. 16, a description is made of the case of using the blanking technique in detail. The receiver may acquire interference signal information at operation 1601. The interference signal information may be extracted from a received interference signal or received from the serving eNB of the UE transmitting the interference signal. During the interference signal information acquisition process, the receiver may also acquire the information on whether the frequency region being affected by the interference signal is broadband or narrowband in the desired signal. Whether the interference-affected frequency region is broadband or narrowband may be determined based on whether the interference-affected frequency region range is greater than a predetermined threshold range.

The receiver may estimate channels of the desired signal and interference signals at operation 1602. The receiver may estimate fading channels of the desired signal and the interference signals. The receiver may use the DMRS information per signal for fading channel estimation.

The receiver may perform a blanking operation on the received signal at operation 1603. The receiver may determine whether to perform the blanking operation based on the interference signal information acquisition result. For example, the receiver performs blanking on the interference frequency region for the narrowband interference but not for the broadband interference. In the case of not performing the blanking operation, the receiver may perform an interference signal cancellation and target signal decoding operation as described with reference to FIG. 3.

If it is determined to perform the blanking operation, it may be possible to remove the frequency region of the received signal that is affected by the interference signal in the frequency domain. The receiver performs at operation 1604 a channel compensation operation on the blanked received signal. Afterward, the receiver may perform an M-point IDFT operation at operation 1605, an LLR calculation operation at operation 1606, and a channel decoding operation at opration 1607. If the CRC test on the decoding output fails, the receiver may perform subsequent operations. The subsequent operations may include a re-modulation operation 1608 and an M-point DFT operation 1609 that are performed on the decoding output. At operation 1619, the receiver performs blanking region recovery on the output of the M-point DFT operation of operation 1609. The receiver recovers the blanking region with the output of operation 1609, and the output of operation 1619 is input to the operation of operation 1605 again. The receiver performs the operations in the order of 1605 -> 1606 -> 1607. If the operations fail, the receiver performs the operation of operation 1608.

A blanking cycle operation is performed in the order of 1605 -> 1606 -> 1607 - > 1608 -> 1609 -> 1619 -> 1605. Although the CRC test fails continuously, it is impossible to perform the blanking cycle indefinitely. The receiver may set a number of blanking cycles. If the CRC test on the decoding output fails the preset number of times, the procedure may go from operation 1609 to 1610 rather than 1619.

Afterward, the UE may perform the subsequent operations in the order of 1610 -> 1611 -> 1612 -> 1613 -> 1614 -> 1615 -> 1616 -> 1617 -> 1618 -> 1620 -> 1621 -> 1622. In detail, the receiver performs SL-IC, removes outputs of SL-IC operation from the receiver signal, and decodes the target signal as described in the embodiment of FIG. 3.

In the embodiment of FIG. 16, the receiver applies the blanking technique for narrowband interference but not for broadband interference to manage the operation efficiently.

A description is made of the method for sharing the interference signal information additionally in the embodiment of the present invention. The eNB may determine a UE having a high probability of transmitting a strong interference signal to a neighboring eNB among the UEs it serves as a candidate UE. For example, the UE having a high probability of transmitting a strong interference signal may be a cell-edge UE.

The eNB may apply a resource and Modulation and Coding Scheme (MCS) allocation method to the candidate as follows. For example, the eNB may fix or restrict an RB start point or an RB size for the candidate UE. The eNB may also fix a modulation order for the corresponding UE. The eNB may also fix a cyclic shift (CS) variable among the DMRS parameters for the corresponding UE. In this way, the eNB may apply a resource allocation method to the candidate UE.

The eNB may apply the above information and share the information on the candidate UE with neighboring eNBs. Applying the above resource and MCS allocation method may achieve the same result as preconfiguring part of interference signal information. Accordingly, it may be possible to reduce the load of the eNB that is caused by the influence of the UE transmitting interference signals. For example, if the UE cannot acquire the interference information from the neighboring eNBs, it has to extract the interference information through blind interference sensing on the interference signals. In the case of sharing the interference information among the neighboring eNBs, however, it may be possible to reduce the complexity of the eNB that is affected by interference. In the case of acquiring the information on the interference signal transmitted by an interferer UE from the neighboring eNBs, it may be possible to omit the operations corresponding to the operations of acquiring the interference signal information in each embodiment, resulting in reduction of processing complexity.

Meanwhile, it is important for the eNB that provides the neighboring eNBs with the interference information to determine a candidate interferer UE. For example, the eNB may determine whether a UE is the candidate interferer UE transmitting an interference signal based on the downlink received signal strength at the UE. If the downlink received signal strength of a neighboring eNB is equal to or greater than a predetermined threshold value, the UE may transmit to the serving cell an indicator indicating that the above condition is fulfilled. If the indicator is received from the UE, the eNB determines the UE as the candidate interferer UE.

The UE may determine whether it is the candidate interferer UE based on the downlink received signal strength and downlink received signal strength information of the serving cell. The UE may measure the downlink received signal strengths of the serving cell and the neighboring eNBs. The UE may calculate the difference between the received signal strength estimation values from the neighboring eNB and the serving eNB. If the calculated difference is less than a predetermined threshold value, the UE may transmit to the serving cell an indicator indicating the above condition is fulfilled. The UE may calculate a ratio between the received signal strength estimation value of the neighboring eNB and the received signal strength of the serving eNB (e.g., (downlink received signal strength estimation value of neighboring eNB/downlink received signal strength of serving eNB). If the calculated ratio value is greater than a predetermined threshold value, the UE may transmit to the serving cell an indicator indicating that the above condition is fulfilled. If the indicator is received, the serving eNB may determine the UE that has transmitted the indicator as the candidate interferer UE.

Considering the above condition, it may be possible to consider the transmit power information of the serving and neighboring eNBs. If the transmit powers of the serving and neighboring eNBs are different from each other, it may be possible to apply a weight to the transmit powers to determine whether a threshold condition is fulfilled. If the downlink transmit powers of the serving and neighboring eNBs are identical with each other and if the threshold condition is fulfilled, the corresponding UE is likely to be a strong interferer UE to the neighboring eNB in the uplink transmission situation.

Another method can be used to determine a candidate interferer UE. In the above-proposed method, the determination accuracy may drop when the transmit powers of the eNBs are different from each other. For example, when a macro eNB (base station) and a small eNB (small cell base station) are located close to each other, the determination accuracy is likely to drop. Such a problem can be solved as follows. It is assumed that the UE has the information on the transmit powers of the neighboring eNBs. For example, the transmit power information may be shared among the eNBs through an X2 interface, and the serving eNB may transmit the information on the neighboring eNB to the UE it serves. The UE estimates the received signal strength of the neighboring eNB using a downlink signal. The UE may calculate a ratio between the estimated received signal strength and the transmit power of the eNB to acquire the information on the propagation losses of the signals from the eNBs. The UE may calculate the difference of the propagation losses from the neighboring and serving eNBs. If the difference is less than a predetermined threshold value, the corresponding UE may transmit to the serving eNB an indicator indicating that the threshold condition is fulfilled. The serving eNB may determine the UE transmitting the indicator as the candidate interferer UE.

The UE may also estimate a distance from the eNB transmitting a signal or a radio environment based on the propagation loss of the signal. If the propagation loss of the signal from the neighboring eNB is equal to or greater than a predetermined threshold value, the UE may transmit to the serving eNB an indicator indicating that the threshold condition for the neighboring UE is fulfilled. The serving eNB may determine the eNB transmitting the indicator as the candidate interferer UE.

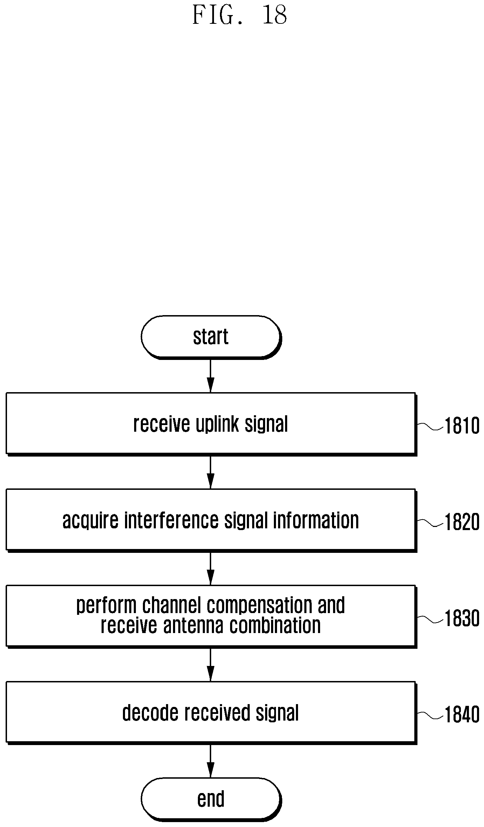

FIG. 18 is a flowchart illustrating a signal processing method according to an embodiment of the present invention.

In reference to FIG. 18, the receiver may receive a signal transmitted by a UE at operation 1810. The signal transmitted by the UE is an uplink signal. The receiver may be an eNB. The receiver may receive a first signal transmitted by a first UE and a second signal transmitted by a second UE, the second signal including interference to the first signal.

The receiver may acquire at operation 1820 the information on the interference signal from the received signal. The interference signal information may include at least one of resource block allocation information associated with the interference signal and a reference signal for demodulating the interference signal. The resource block allocation information may also include resource block allocation information for the whole resource region allocated for uplink transmission of the second UE. The receiver may estimate fading channels of the first signal and the interference signal based on the acquired information.

The receiver may perform channel compensation on the first signal and the interference signal at operation 1830. The channel compensation on the first signal and the interference signal may be performed based on the RB allocation information and the fading channel information of the first signal and the interference signal.

The receiver may decode at operation 1840 the first signal based on the channel compensation result. If it fails to decode the first signal, the receiver may perform additional operations as described with reference to FIGs. 1 to 17. The additional operations may include the SL-IC operation.

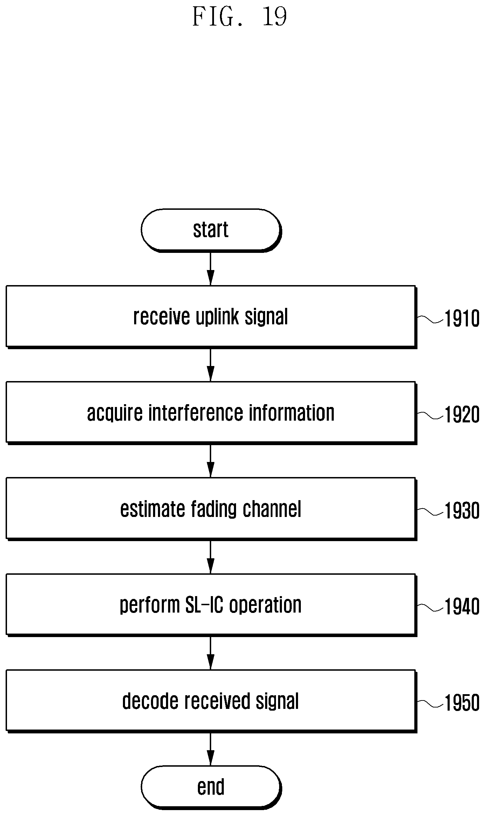

FIG. 19 is a flowchart illustrating a signal processing method according to another embodiment of the present invention.

In reference to FIG. 19, the receiver may receive a signal transmitted by a UE at operation 1910. The signal transmitted by the UE is an uplink signal. The receiver may be an eNB. The receiver may receive a first signal transmitted by a first UE and a second signal transmitted by a second UE, the second signal including interference to the first signal.

The receiver may acquire at operation 1920 the information on the interference signal from the received signal. The interference signal information may include at least one of resource block allocation information associated with the interference signal and a reference signal for demodulating the interference signal. The resource block allocation information may also include resource block allocation information for the whole resource region allocated for uplink transmission of the second UE.

The receiver may estimate at operation 1930 fading channels of the first signal and the interference signal based on the acquired information. The fading channel information may be applied to the subsequent SL-IC operation.

The receiver may perform a Symbol Level-Interference Cancellation (SLIC) at operation 1940. The SL-IC operation may be performed on the interference signal based on the RB allocation information and fading channel information of the first signal and the interference signal. The receiver may perform the operation as follows during the SL-IC.

The receiver may remove the estimation value of the first signal from the second signal and perform channel compensation on the interference signal based on the information on the output acquired by removing the fading channel information of the first signal from the second signal, RB allocation information, and the fading channel information of the first signal and interference signal. The receiver may perform Inverse Discrete Fourier Transform(IDFT) on the interference signal based on the RB allocation information and estimate the modulation order of the interference signal.

During the SL-IC, the receiver may estimate a reliability based on the IDFT output and modulation order information. If the reliability is equal to or greater than a predetermined threshold value, the SL-IC result may be reflected in the subsequent operation. If the reliability is less than the threshold value, the receiver may stop the SL-IC operation, skip reflecting the SL-IC result, or set the SL-IC output to 0.

If there are multiple interference signals to the first signal, the receiver may perform the SL-IC operation on each of the interference signals transmitted by the multiple UEs.

The receiver may decode the first signal using the output of the SL-IC operation. The receiver may remove the SL-IC output from the second signal and perform channel compensation on the output acquired by removing the LS-IC output from the second signal.

The receiver may decode at operation 1950 the first signal based on the channel compensation result.

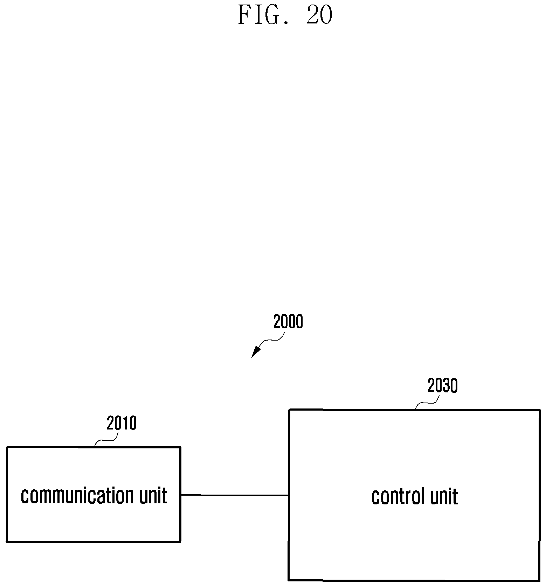

FIG. 20 is a block diagram illustrating a receiver according to an embodiment of the present invention. In an embodiment of the present invention, the receiver 2000 may be an eNB. The receiver may include a communication unit 2010 and control unit 2030.

The communication unit is capable of communicating with at least one UE. The communication unit is capable of receiving an uplink signal transmitted by a UE. The communication unit may also receive an interference signal from a neighboring eNB.

The control unit 2030 may control receiving a first signal transmitted by a first UE and a second signal including an interference signal to the first signal, acquiring information on the interference signal, removing the interference signal based on the acquired information, removing the interference signal from the second signal, and decoding the first signal. Here, the interference signal information may include at least one of resource block allocation information for the interference signal and a reference signal for modulation of the interference signal. The resource block allocation information may include resource block allocation information for the whole resource region allocated for uplink transmission of the second UE.

The control unit 2030 may control estimating fading channels of the first signal and the interference signal based on the acquired information. The control unit 2030 may also control performing channel compensation on the first signal and the interference signal based on the RB allocation information and the fading channel information of the first signal and the interference signal.

The control unit 2030 may control performing symbol level interference cancellation (SL-IC) on the interference signal based on the RB allocation information and the fading channel information of the first signal and the interference signal during the interference signal cancellation operation. The control unit 2030 may also control performing Inverse Discrete Fourier Transform (IDFT) on the interference signal based on the RB allocation information and estimating the modulation order of the interference signal during the SL-IC operation.

The control unit 2030 may also control performing channel compensation on the interference signal based on the RB allocation information of the first signal and the interference signal and the fading channel information of the first signal and the interference signal during the SL-IC operation.

The control unit 2030 may also control removing first signal estimation value from the second signal and performing channel compensation on the interference signal based on output information acquired after removing the first signal estimation value from the second signal, the RB allocation information, and the fading channel information of the first signal and the interference signal during the SL-IC operation.

The control unit 2030 may also control removing the SL-IC output from the second signal and performing channel compensation on the output acquired by removing the SL-IC output from the second signal during the interference signal cancellation operation. The control unit 2030 may also control performing the SL-IC operation on each of the interference signals from at least two second UEs during the interference signal cancellation operation.

The control unit 2030 may also control estimating a reliability based on the IDFT output and modulation order information and, if the reliability is equal to or less than a predetermined threshold value, skipping reflection of the SL-IC operation result during the SL-IC operation.

Although the receiver 2000 is illustrated as having separated function blocks for convenience of explanation, the configuration and functions of the receiver 2000 are not limited thereby. The receiver 2000 or the control unit 2030 of the receiver may perform or control the operations of the receiver that have been described with reference to FIGs. 1 to 17 as well as the operations described with reference to FIG. 20. Since the neighboring eNB can work as a receiver, the neighboring eNB may operate as described in the above embodiments under the control of the control unit 2030 of the receiver.

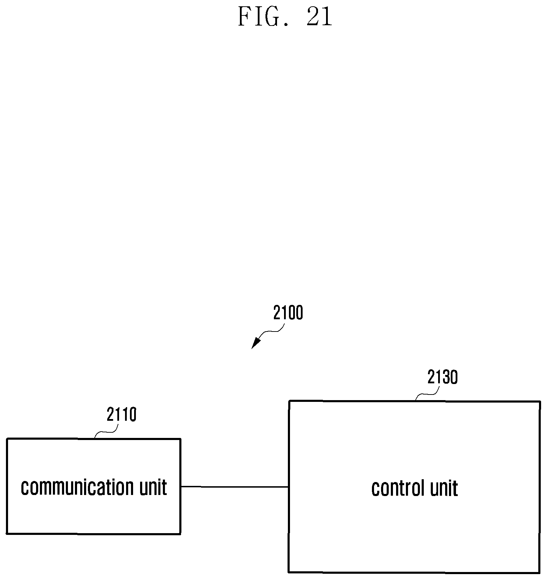

FIG. 21 is a block diagram illustrating a UE according to an embodiment of the present invention.

The UE 2100 may include a communication unit 2110 for communication with at least one eNB and a control unit 2130 for controlling overall operation of the UE. The control unit 2130 may control receiving scheduling information from an eNB and transmitting an uplink signal based on the scheduling information. The control unit 2130 of the UE may control receiving downlink signals transmitted by a serving eNB or a neighboring eNB and estimating received signal strength of the downlink signals. The control unit 2130 may estimate a ratio of received signal power to the transmitted signal power. The control unit 2130 may control transmitting to the serving eNB an indicator generated based on the estimation result. The indicator may be used to determine whether the UE is a candidate interferer UE that may cause interference to the neighboring eNB.

Although the UE is illustrated as having separated function blocks for convenience of explanation, the configuration and functions of the UE are not limited thereby.

The control unit 2130 of the UE may control the operations of the UE that have been described with reference to FIGs. 1 to 17 as well as the operations described with reference to FIG. 21.

Although various embodiments of the present disclosure have been described using specific terms, the specification and drawings are to be regarded in an illustrative rather than a restrictive sense in order to help understand the present invention. Thus, the scope of the invention should be determined by the appended claims and their legal equivalents rather than the specification, and various alterations and modifications within the definition and scope of the claims are included in the claims.

**Claims**

1. A method for receiving a signal in a mobile communication system, the method comprising:

   receiving a second signal including a first signal transmitted by a first terminal and an interference signal to the first signal, the interference signal being transmitted by a second terminal;
   acquiring information on the interference signal;
   cancelling the interference signal based on the acquired information; and
   decoding the first signal by cancelling the interference signal from the second signal,
   wherein the interference signal information comprises at least one of resource block (RB) allocation information of the interference signal and a reference signal for modulating the interference signal.

2. The method of claim 1, wherein the RB allocation information comprises resource block allocation information of a whole frequency region allocated for uplink transmission of the second terminal.

3. The method of claim 1, further comprising estimating fading channels of the first signal and the interference signal based on the acquired information.

4. The method of claim 3, wherein cancelling the interference signal comprises performing channel compensation on the first signal and the interference signal based on the RB allocation information and the fading channel information of the first signal and the interference signal.

5. The method of claim 3, wherein cancelling the interference signal comprises performing a Symbol Level-Interference Cancellation (SL-IC) on the interference signal based on the RB allocation information and the fading channel information of the first signal and the interference signal.

6. The method of claim 5, wherein performing the SL-IC comprises:

   removing an estimation value of the first signal from the second signal; and
   performing channel compensation on the interference signal based on output information acquired by removing the estimation value of the first signal from the second signal, the RB allocation information, and the fading channel information of the first signal and the interference signal.

7. The method of claim 5, wherein performing the SL-IC comprises compensating the channel of the interference signal based on the RB allocation information of the first signal and the interference signal and the fading channel information of the first signal and the interference signal.

8. The method of claim 5, wherein performing the SL-IC comprises:

   performing Inverse Discrete Fourier Transform (IDFT) on the interference signal; and
   estimating a modulation order of the interference signal.

9. The method of claim 5, wherein cancelling the interference signal comprises:

   cancelling the SL-IC output from the second signal; and
   performing the channel compensation on an output that results from cancelling the SL-IC output from the second signal.

10. The method of claim 5, wherein cancelling the interference signal comprises performing the SL-IC on each of interference signals transmitted by at least two second terminals.

11. The method of claim 8, wherein performing the SL-IC comprises:

estimating a reliability based on the IDFT output and the modulation order; and
skipping, when the reliability is equal to or less than a threshold value, reflection of the SL-IC operation result.

12. The method of claim 1, wherein the mobile communication system operates based on a Single Carrier-Frequency Division Multiple Access (SC-FDMA), and the signals transmitted by the terminals are SC-FDMA-based uplink signals.

13. A receiver for receiving uplink signals in a mobile communication system, the receiver comprising:

a communication unit which receives signals transmitted by at least one terminal; and
a control unit which controls receiving a second signal including a first signal transmitted by a first terminal and an interference signal to the first signal, the interference signal being transmitted by a second terminal, acquiring information on the interference signal, cancelling the interference signal based on the acquired information, and decoding the first signal by cancelling the interference signal from the second signal,
wherein the interference signal information comprises at least one of resource block (RB) allocation information of the interference signal and a reference signal for modulating the interference signal.

14. The receiver of claim 13, wherein the RB allocation information comprises resource block allocation information of a whole frequency region allocated for uplink transmission of the second terminal.

15. The receiver of claim 13, wherein the control unit controls estimating fading channels of the first signal and the interference signal based on the acquired information.

16. The receiver of claim 15, wherein the control unit controls performing channel compensation on the first signal and the interference signal based on the RB allocation information and the fading channel information of the first signal and the interference signal.

17. The receiver of claim 15, wherein the control unit controls performing a Symbol Level-Interference Cancellation (SL-IC) on the interference signal based on the RB allocation information and the fading channel information of the first signal and the interference signal.

18. The receiver of claim 17, wherein the control unit controls, during the SL-IC, removing an estimation value of the first signal from the second signal and performing channel compensation on the interference signal based on output information acquired by removing the estimation value of the first signal from the second signal, the RB allocation information, and the fading channel information of the first signal and the interference signal.

19. The receiver of claim 17, wherein the control unit controls, during the SL-IC, compensating the channel of the interference signal based on the RB allocation information of the first signal and the interference signal and the fading channel information of the first signal and the interference signal.

20. The receiver of claim 17, wherein the control unit controls, during the SL-IC, performing Inverse Discrete Fourier Transform (IDFT) on the interference signal and estimating a modulation order of the interference signal.

21. The receiver of claim 17, wherein the control unit controls, during the interference signal cancellation, cancelling the SL-IC output from the second signal and performing the channel compensation on an output that results from cancelling the SL-IC output from the second signal.

22. The receiver of claim 17, wherein the control unit controls performing the SL-IC on each of interference signals transmitted by at least two second terminals.

23. The receiver of claim 20, wherein the control unit controls estimating a reliability based on the IDFT output and the modulation order and skipping, when the reliability is equal to or less than a threshold value, reflection of the SL-IC operation result.

**24.** The receiver of claim 13, wherein the mobile communication system operates based on a Single Carrier-Frequency Division Multiple Access (SC-FDMA), and the signals transmitted by the terminals are SC-FDMA-based uplink signals.

FIG. 1

FIG. 2

# FIG. 3

EP 3 211 811 A1

FIG. 4

FIG. 5

(a)

(b)

# FIG. 6A

# FIG. 6B

EP 3 211 811 A1

# FIG. 6C

EP 3 211 811 A1

# FIG. 7

# FIG. 8A

EP 3 211 811 A1

# FIG. 8B

# FIG. 8C

target signal fading channel estimation value

SL-IC (2nd DI)

ICI RB allocation information, target and ICI signals fading channel estimation values

671a — cancel target signal and first DI signal from received signal

672a — Direct MMSE-IRC

ICI RB allocation information

673a — $M_K$-point IDFT

Modulation Order Estimation — 674a

modulation order of ICI

675a — LLR Calc.

670a

ICI RB allocation information

677a — $M_K$-point DFT

676a — Soft Modulation

modulation order of ICI

ICI RB allocation information, ICI fading channel estimation value

ICI RB allocation information, target and ICI signals fading channel estimation values

681a — cancel first and second DI signals from received signal

683a — Direct MMSE-IRC

685a — M-point IDFT

687a — LLR Calc.

689a — Channel Decoding

680a

EP 3 211 811 A1

FIG. 9A

# FIG. 9B

FIG. 9C

SL-IC
(2nd DI)

ICI RB allocation information,
target and ICI signals fading
channel estimation values

672a

ICI RB allocation
information

673a

Modulation Order
Estimation

670a
674a

modulation order of ICI

target signal fading channel
estimation value

cancel target
signal and first
DI signal from
received signal

671a

Direct
MMSE-IRC

$M_k$ –point
IDFT

LLR
Calc.

675a

676a

ICI RB allocation information

$M_k$ –point
DFT

677a

Soft
Modulation

modulation order
of ICI

ICI RB allocation information, target and ICI
signals fading channel estimation values

680a

ICI RB allocation information,
ICI fading channel
estimation value

cancel first and
second DI signals
from received signal

Direct
MMSE-IRC

M-point
IDFT

LLR
Calc.

Channel
Decoding

681a

683a

685a

687a

689a

EP 3 211 811 A1

FIG. 10

FIG. 11A

# FIG. 11B

EP 3 211 811 A1

# FIG. 11C

# FIG. 12

EP 3 211 811 A1

FIG. 13A

311 CP Remove
313 S/P
315 N-point FFT

321 acquire ICI information

ICI DMRS, ICI RB allocation information

325 CE (SIC ON for 1st DI)

target and ICI signals fading channel estimation values

370 SL-IC

372 Direct MMSE-IRC

ICI RB allocation information, target and ICI signals fading channel estimation values

373 M_k-point IDFT

ICI RB allocation information

374 Modulation Order Estimation

modulation order of ICI

375 LLR Calc.

modulation order of ICI

376 Soft Modulation

ICI RB allocation information

377 M_k-point DFT

ICI RB allocation information, target and ICI signals fading channel estimation values

ICI RB allocation information, ICI fading channel estimation value

381 cancel first DI from received signal

383 Direct MMSE-IRC

385 M-point IDFT

387 LLR Calc.

389 Channel Decoding

CRC Check Pass
CRC Check Fail

625 CE (SIC ON for 1st & 2nd DI)

target and ICI signals fading channel estimation values

669 M_k-point DFT

668 Soft Modulation

25
26
27

41

# FIG. 13B

FIG. 14

SL-IC (1st DI)

ICI DMRS, ICI RB allocation information

321 acquire ICI information

311 CP Remove
313 S/P
315 N-point FFT
625 CE (SIC ON for 1st & 2nd DI)

target signal fading channel estimation value

671 cancel target signal and first DI signal from received signal

672 Direct MMSE-IRC

ICI RB allocation information, target and ICI signals fading channel estimation values

target signal fading channel estimation value

673 M_K-point IDFT

ICI RB allocation information

674 Modulation Order Estimation
modulation order of ICI
675 LLR Calc.
676 Soft Modulation
modulation order of ICI
677 M_K-point DFT

670

SL-IC (2nd DI)

671a cancel target signal and second DI signal from received signal

target signal fading channel estimation value

672a Direct MMSE-IRC

ICI RB allocation information, ICI fading channel estimation value

673a M_K-point IDFT

ICI RB allocation information

670a
674a Modulation Order Estimation
modulation order of ICI
675a LLR Calc.
676a Soft Modulation
modulation order of ICI
677a M_K-point DFT

680a
681a cancel first and second DI signals from received signal

ICI RB allocation information, ICI fading channel estimation value

683a Direct MMSE-IRC
685a M-point IDFT
687a LLR Calc.
689a Channel Decoding

# FIG. 15

# FIG. 16

# FIG. 17

1710

frequency band

↓ Blanking

⇒ Iterative Reconstruction

# FIG. 18

```
               ┌─────────────┐
               │    start    │
               └──────┬──────┘
                      │
                      ▼
       ┌──────────────────────────────┐
       │     receive uplink signal     │───1810
       └──────────────┬───────────────┘
                      │
                      ▼
       ┌──────────────────────────────┐
       │ acquire interference signal   │───1820
       │         information           │
       └──────────────┬───────────────┘
                      │
                      ▼
       ┌──────────────────────────────┐
       │  perform channel compensation │
       │  and receive antenna          │───1830
       │  combination                  │
       └──────────────┬───────────────┘
                      │
                      ▼
       ┌──────────────────────────────┐
       │    decode received signal     │───1840
       └──────────────┬───────────────┘
                      │
                      ▼
               ┌─────────────┐
               │     end     │
               └─────────────┘
```

# FIG. 19

```
                    ╭─────────────╮
                    │    start     │
                    ╰──────┬──────╯
                           │
                           ▼
        ┌──────────────────────────────────┐
        │      receive uplink signal       │──── 1910
        └──────────────────┬───────────────┘
                           │
                           ▼
        ┌──────────────────────────────────┐
        │    acquire interference information │──── 1920
        └──────────────────┬───────────────┘
                           │
                           ▼
        ┌──────────────────────────────────┐
        │       estimate fading channel     │──── 1930
        └──────────────────┬───────────────┘
                           │
                           ▼
        ┌──────────────────────────────────┐
        │       perform SL-IC operation     │──── 1940
        └──────────────────┬───────────────┘
                           │
                           ▼
        ┌──────────────────────────────────┐
        │       decode received signal      │──── 1950
        └──────────────────┬───────────────┘
                           │
                           ▼
                    ╭─────────────╮
                    │     end      │
                    ╰─────────────╯
```

FIG. 20

2000

2030

2010

communication unit

control unit

FIG. 21

2100

2130

2110

communication unit

control unit

# EP 3 211 811 A1

## INTERNATIONAL SEARCH REPORT

International application No.

**PCT/KR2015/011196**

| | |
|---|---|
| A. CLASSIFICATION OF SUBJECT MATTER | |

*H04J 11/00(2006.01)i*

According to International Patent Classification (IPC) or to both national classification and IPC

| B. FIELDS SEARCHED |
|---|

Minimum documentation searched (classification system followed by classification symbols)
H04J 11/00; H04L 5/00; H04W 24/02; H04W 24/00; H04W 52/04; H04W 4/00; H04B 1/10; H04W 72/08

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: interference(interference), cancellation(cancellation), symbol level(symbol level)

| C. DOCUMENTS CONSIDERED TO BE RELEVANT | | |
|---|---|---|
| Category* | Citation of document, with indication, where appropriate, of the relevant passages | Relevant to claim No. |
| X | US 2014-0307569 A1 (QUALCOM INCORPORATED) 16 October 2014<br>See paragraphs [0046]-[0048], [0061], [0064], [0080], [0081], [0088] and figures 2-4, 6. | 1-24 |
| A | US 2013-0114437 A1 (YOO, Taesang et al.) 09 May 2013<br>See paragraphs [0145]-[0150] and figure 13. | 1-24 |
| A | US 2012-0093269 A1 (YU, Yingqun et al.) 19 April 2012<br>See paragraphs [0022]-[0052] and figures 1-9. | 1-24 |
| A | US 2013-0044697 A1 (YOO, Taesang et al.) 21 February 2013<br>See paragraphs [0068], [0086]-[0092] and figure 7. | 1-24 |
| A | US 2014-0243030 A1 (SAMSUNG ELECTRONICS CO., LTD.) 28 August 2014<br>See paragraphs [0040]-[0090] and figures 3-7. | 1-24 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 FEBRUARY 2016 (04.02.2016) | **04 FEBRUARY 2016 (04.02.2016)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (January 2015)

INTERNATIONAL SEARCH REPORT
Information on patent family members

International application No.

**PCT/KR2015/011196**

| Patent document cited in search report | Publication date | Patent family member | Publication date |
|---|---|---|---|
| US 2014-0307569 A1 | 16/10/2014 | WO 2014-168863 A2 | 16/10/2014 |
| | | WO 2014-168863 A3 | 11/12/2014 |
| US 2013-0114437 A1 | 09/05/2013 | CN 103999389 A | 20/08/2014 |
| | | EP 2774292 A1 | 10/09/2014 |
| | | JP 2015-501622 A | 15/01/2015 |
| | | KR 10-2014-0099263 A | 11/08/2014 |
| | | WO 2013-066399 A1 | 10/05/2013 |
| US 2012-0093269 A1 | 19/04/2012 | US 8995498 B2 | 31/03/2015 |
| | | WO 2012-054494 A1 | 26/04/2012 |
| US 2013-0044697 A1 | 21/02/2013 | CN 103765972 A | 30/04/2014 |
| | | EP 2745592 A1 | 25/06/2014 |
| | | JP 2014-529949 A | 13/11/2014 |
| | | KR 10-2014-0054279 A | 08/05/2014 |
| | | WO 2013-025943 A1 | 21/02/2013 |
| US 2014-0243030 A1 | 28/08/2014 | KR 10-2014-0107962 A | 05/09/2014 |
| | | WO 2014-133354 A1 | 04/09/2014 |

Form PCT/ISA/210 (patent family annex) (January 2015)